(19) Europäisches Patentamt / European Patent Office / Office européen des brevets

(11) **EP 4 375 872 B1**

(12) **EUROPEAN PATENT SPECIFICATION**

(45) Date of publication and mention of the grant of the patent:
**17.06.2026 Bulletin 2026/25**

(21) Application number: **22857498.4**

(22) Date of filing: **20.07.2022**

(51) International Patent Classification (IPC):
**G06V 20/00** (2022.01)   **G06F 18/213** (2023.01)
**G06V 10/82** (2022.01)   **G06V 20/20** (2022.01)
**G06V 20/56** (2022.01)   **G06V 10/74** (2022.01)
**G06V 10/764** (2022.01)   **G06V 10/96** (2022.01)

(52) Cooperative Patent Classification (CPC):
**G06V 10/82; G06F 18/213; G06V 10/761;**
**G06V 10/764; G06V 20/00;** G06V 10/96;
G06V 20/20; G06V 20/35; G06V 20/56

(86) International application number:
**PCT/CN2022/106734**

(87) International publication number:
**WO 2023/020185 (23.02.2023 Gazette 2023/08)**

(54) **IMAGE CLASSIFICATION METHOD AND RELATED DEVICE**

BILDKLASSIFIZIERUNGSVERFAHREN UND ZUGEHÖRIGE VORRICHTUNG

PROCÉDÉ DE CLASSIFICATION D'IMAGE ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2021 CN 202110950638**

(43) Date of publication of application:
**29.05.2024 Bulletin 2024/22**

(73) Proprietor: **Huawei Technologies Co., Ltd.**
**Shenzhen, Guangdong 518129 (CN)**

(72) Inventors:
• **SHU, Han**
  Shenzhen, Guangdong 518129 (CN)
• **WANG, Jiahao**
  Shenzhen, Guangdong 518129 (CN)
• **CHEN, Hanting**
  Shenzhen, Guangdong 518129 (CN)
• **LI, Wenshuo**
  Shenzhen, Guangdong 518129 (CN)
• **WANG, Yunhe**
  Shenzhen, Guangdong 518129 (CN)

(74) Representative: **Pfenning, Meinig & Partner mbB**
**Patent- und Rechtsanwälte**
**Theresienhöhe 11a**
**80339 München (DE)**

(56) References cited:
CN-A- 110 781 409    CN-A- 112 464 643
CN-A- 112 466 326    CN-A- 113 256 636
US-A1- 2021 248 473

• **ALEXEY DOSOVITSKIY ET AL: "An Image is Worth 16x16 Words: Transformers for Image Recognition at Scale", ARXIV.ORG, CORNELL UNIVERSITY LIBRARY, 201 OLIN LIBRARY CORNELL UNIVERSITY ITHACA, NY 14853, 3 June 2021 (2021-06-03), XP081976531**
• **ASHISH VASWAN ET AL: "Attention Is All You Need", 31ST CONFERENCE ON NEURAL INFORMATION PROCESSING SYSTEMS (NIPS 2017), 12 June 2017 (2017-06-12), XP055506908, Retrieved from the Internet <URL:https://arxiv. org/pdf/1706.03762.pdf> [retrieved on 20180913]**
• **CHEN HANTING ET AL: "Universal Adder Neural Networks", 29 June 2021 (2021-06-29), pages 1 - 13, XP093216680, Retrieved from the Internet <URL:https://arxiv.org/pdf/2105.14202> [retrieved on 20241021]**

**Description**

**TECHNICAL FIELD**

This application relates to the field of artificial intelligence (artificial intelligence, AI) technologies, and in particular, to an image classification method, an image classification apparatus, a computer storage medium and a computer program product.

**BACKGROUND**

ALEXEY DOSOVITSKIY ET AL: "An Image is Worth 16x16 Words: Transformers for Image Recognition at Scale", ARXIV.ORG, CORNELL UNIVERSITY LIBRARY, 201 OLIN LIBRARY CORNELL UNIVERSITY ITHACA, NY 14853, 3 June 2021 (2021-06-03) describes a method for performing image classification tasks in which a pure transformer is applied directly to sequences of image patches.

Image classification is one of important tasks of computer vision, and has important applications in fields such as autonomous driving, industrial vision, and the like. A transformer network is a neural network constructed based on a self-attention (self-attention) mechanism. Thanks to high performance of the model in image classification and other tasks, the model has drawn extensive attention.

Currently, after a to-be-classified target image is input into the transformer network, the transformer network may perform a series of processing on the target image to obtain an attention feature of the target image, and then obtain a classification result of the target image based on the attention feature of the target image.

However, an operation of obtaining the attention feature of the target image by the transformer network usually includes a large quantity of multiplication operations, and requires high computational overheads. As a result, it is difficult to apply the transformer network to terminal devices with limited computing power.

**SUMMARY**

Embodiments of this application provide an image classification method, an image classification apparatus, a computer storage medium and a computer program product according to the independent claims, so that an operation of obtaining an attention feature by a transformer network no longer includes a large quantity of multiplication operations but are replaced by addition operations with relatively low computational overheads. Therefore, the transformer network can be extensively applied to terminal devices with limited computing power.

A first aspect of the embodiments of this application provides an image classification method. The method includes:

When a category of a target image needs to be determined, the target image is input into a transformer network, so that the transformer network implements the following steps:

The transformer network obtains M first features of the target image, where M is an integer greater than or equal to 1.

Then the transformer network performs linear transformation processing based on a $k^{th}$ first feature to obtain a $k^{th}$ second feature, a $k^{th}$ third feature, and a $k^{th}$ fourth feature, where k=1, ..., M. The second feature is understood as a Q-feature in a self-attention mechanism, the third feature may be understood as a K-feature in the self-attention mechanism, and the fourth feature may be understood as a V-feature in the self-attention mechanism.

Then the transformer network calculates a distance between the $k^{th}$ second feature and the $k^{th}$ third feature to obtain a $k^{th}$ fifth feature. Generally, the distance between the $k^{th}$ second feature and the $k^{th}$ third feature may be an L1 distance (L1 distance), or may be an L2 distance (L2 distance). Therefore, calculation of the distance between the $k^{th}$ second feature and the $k^{th}$ third feature can be usually implemented based on an addition operation.

Then the transformer network performs first fusion processing based on the $k^{th}$ fifth feature and the $k^{th}$ fourth feature to obtain a $k^{th}$ sixth feature.

For other first features other than the $k^{th}$ first feature, the transformer network also performs the foregoing operations on the other first features. Therefore, the transformer network may obtain M sixth features, and the transformer network may obtain a classification result of the target image based on the M sixth features.

As can be learned from the foregoing method, after obtaining M first features of the target image, the transformer network may perform linear transformation processing based on the $k^{th}$ first feature to obtain the $k^{th}$ second feature (that is, the Q-feature), the $k^{th}$ third feature (that is, the K-feature), and the $k^{th}$ fourth feature (that is, the V-feature), where k=1, ..., M. Then the transformer network calculates the distance between the $k^{th}$ second feature and the $k^{th}$ third feature to obtain the $k^{th}$ fifth feature (that is, the attention feature). Then the transformer network performs first fusion processing based on the $k^{th}$ fifth feature and the $k^{th}$ fourth feature to obtain the $k^{th}$ sixth feature. After obtaining the M sixth features, the transformer network may obtain the classification result of the target image based on the M sixth features. In the process, because calculation of the distance between the second feature and the third feature can be implemented by a large quantity of addition operations, the operation of obtaining the fifth feature (that is, the attention feature) by the transformer network no longer includes a large quantity of multiplication operations, but are replaced by addition operations with relatively low computational overheads. Therefore, the transformer network can be extensively applied to terminal devices with limited computing power.

In a possible implementation, the calculating a distance between the $k^{th}$ second feature and the $k^{th}$ third feature includes: calculating the distance between the $k^{th}$ second feature and the $k^{th}$ third feature based on an addition operation to obtain the $k^{th}$ fifth feature. In the foregoing implementation, the process of obtaining the fifth feature by the transformer network mainly involves the addition operation and only a few multiplication operations. Therefore, computational overheads of the entire network can be effectively reduced.

In a possible implementation, the $k^{th}$ second feature includes N row vectors, the $k^{th}$ third feature includes N row vectors, and the calculating the distance between the $k^{th}$ second feature and the $k^{th}$ third feature based on an addition operation to obtain the $k^{th}$ fifth feature includes: performing subtraction processing on a $j^{th}$ row vector of the $k^{th}$ second feature and an $i^{th}$ row vector of the $k^{th}$ third feature to obtain a $p^{th}$ first intermediate vector, where j=1, ..., N, i=1, ..., N, and P=1, ..., N$\times$N; performing addition processing on all elements of the $p^{th}$ first intermediate vector to obtain an element in a $j^{th}$ row and an $i^{th}$ column of a $k^{th}$ seventh feature; and performing scaling processing and normalization processing on the $k^{th}$ seventh feature to obtain the $k^{th}$ fifth feature.

In the foregoing implementation, the transformer network performs subtraction processing on the $j^{th}$ row vector of the $k^{th}$ second feature and the $i^{th}$ row vector of the $k^{th}$ third feature, performs addition processing on all the elements of the intermediate vector obtained through the subtraction processing, and then uses a result of the addition processing as the element in the $j^{th}$ row and the $i^{th}$ column of the $k^{th}$ seventh feature. Then the transformer network performs scaling processing and normalization processing on the element in the $j^{th}$ row and the $i^{th}$ column of the $k^{th}$ seventh feature to obtain an element in a $j^{th}$ row and an $i^{th}$ column of the $k^{th}$ fifth feature. Because j=1, ..., N and i=1, ..., N, indicating that the foregoing process is performed for N$\times$N times, the $k^{th}$ fifth feature can be obtained. It can be learned that the process of obtaining the fifth feature by the transformer network mainly involves the addition operation and only a few multiplication operations. Therefore, computational overheads of the entire network can be effectively reduced.

The performing first fusion processing based on the $k^{th}$ fifth feature and the $k^{th}$ fourth feature to obtain a $k^{th}$ sixth feature includes: processing an element of the $k^{th}$ fifth feature and an element of the $k^{th}$ fourth feature based on an addition operation to obtain the $k^{th}$ sixth feature. In the foregoing implementation, the process of obtaining the sixth feature by the transformer network mainly involves the addition operation and a logical operation. Therefore, computational overheads of the entire network can be further reduced.

The $k^{th}$ fourth feature includes N$\times$d/M elements, and the processing an element of the $k^{th}$ fifth feature and an element of the $k^{th}$ fourth feature based on an addition operation to obtain the $k^{th}$ sixth feature includes: performing absolute value processing on an $x^{th}$ column vector of the $k^{th}$ fourth feature to obtain an absolute-value $x^{th}$ column vector of the $k^{th}$ fourth feature; performing addition processing on the absolute-value $x^{th}$ column vector and a $y^{th}$ row vector of the $k^{th}$ fifth feature to obtain a $q^{th}$ second intermediate vector, where x=1, ..., d/M, y=1, ..., N, and h=1, ..., N$\times$d/M; setting a sign of the $q^{th}$ second intermediate vector to be the same as a sign of the $x^{th}$ column vector, to obtain a sign-set $q^{th}$ second intermediate vector; and performing addition processing on all elements of the sign-set $q^{th}$ second intermediate vector to obtain an element in a $y^{th}$ row and an $x^{th}$ column of the $k^{th}$ sixth feature.

In the foregoing implementation, the transformer network performs absolute value processing on the $x^{th}$ column vector of the $k^{th}$ fourth feature to obtain an absolute-value $x^{th}$ column vector of the $k^{th}$ fourth feature. Then the transformer network performs addition processing on the absolute-value $x^{th}$ column vector of the $k^{th}$ fourth feature and the $y^{th}$ row vector of the $k^{th}$ fifth feature, then sets a sign of each element in the intermediate vector obtained through addition processing to be the same as a sign of a corresponding element in the $x^{th}$ column vector of the $k^{th}$ fourth feature, then performs addition processing on all the elements of the sign-set intermediate vector, and uses a result of the addition processing as the element in the $y^{th}$ row and the $x^{th}$ column of the $k^{th}$ sixth feature. Because x=1, ..., d/M and y=1, ..., N, indicating that the foregoing process is performed for N$\times$(d/M) times, the $k^{th}$ sixth feature can be obtained. It can be learned that the process of obtaining the sixth feature by the transformer network mainly involves the addition operation and a logical operation. Therefore, computational overheads of the entire network can be further reduced.

In a possible implementation, the performing linear transformation processing based on a $k^{th}$ first feature to obtain a $k^{th}$ second feature, a $k^{th}$ third feature, and a $k^{th}$ fourth feature includes: obtaining a first weight matrix, a second weight matrix, and a third weight matrix; performing, by using the first weight matrix, the linear transformation processing formed by addition operations, on the $k^{th}$ first feature to obtain the $k^{th}$ second feature; performing, by using the second weight matrix, the linear transformation processing formed by addition operations, on the $k^{th}$ first feature to obtain the $k^{th}$ third feature; and performing, by using the third weight matrix, the linear transformation processing formed by addition operations, on the $k^{th}$ first feature to obtain the $k^{th}$ fourth feature.

In the foregoing implementation, the transformer network performs subtraction processing on an $a^{th}$ row vector of the $k^{th}$ second feature and a $b^{th}$ column vector of the first weight matrix, then performs absolute value processing on all elements of an intermediate vector obtained through the subtraction processing, then performs negative value processing on all absolute-value elements of the intermediate vector, then performs addition processing on all negative-value elements of the intermediate vector, and uses a result obtained through the addition processing as an element in an $a^{th}$ row and a $b^{th}$ column of the $k^{th}$ second feature. Because a=1, ..., N and b=1, ..., d/M, indicating that the foregoing process is performed for N×(d/M) times, the $k^{th}$ second feature can be obtained. Similarly, for the process of obtaining the $k^{th}$ third feature and the $k^{th}$ fourth feature by the transformer network, refer to related descriptions of the $k^{th}$ second feature. Details are not described herein again. It can be learned that the process of obtaining the second feature, the third feature, and the fourth feature by the transformer network basically involves the addition operation. Therefore, computational overheads of the entire network can be further reduced.

In a possible implementation, the method further includes: the transformer network performs addition processing on the $k^{th}$ fifth feature and a preset unit matrix to obtain a $k^{th}$ optimized fifth feature. In the foregoing implementation, after obtaining the attention feature, the transformer network may optimize the attention feature (that is, superimpose a unit matrix), so that main information in the attention feature is distributed more evenly, thereby helping improve performance of the transformer network.

In a possible implementation, the obtaining a classification result of the target image based on the M sixth features includes: the transformer network first performs splicing processing on the M sixth features to obtain an eighth feature of the target image; then the transformer network performs second fusion processing at least once, the linear transformation processing formed by addition operations at least once, and normalization processing at least once based on the M first features and the eighth feature to obtain a ninth feature of the target image; and finally, the transformer network can accurately obtain the classification result of the target image based on the ninth feature.

In a possible implementation, the second fusion processing includes at least one of addition processing, multiplication processing, subtraction processing, concatenation processing, or concatenation convolution processing.

In a possible implementation, sizes of the M first features are the same.

A second aspect of the embodiments of this application provides a model training method. The method includes: obtaining a to-be-processed image; inputting the to-be-processed image into a to-be-trained model to obtain a predictive classification result of the to-be-processed image, where the to-be-trained model is configured to: obtain M first features of the to-be-processed image, where M≥1; perform linear transformation processing based on a $k^{th}$ first feature to obtain a $k^{th}$ second feature, a $k^{th}$ third feature, and a $k^{th}$ fourth feature, where k=1, ..., M; calculate a distance between the $k^{th}$ second feature and the $k^{th}$ third feature to obtain a $k^{th}$ fifth feature; perform first fusion processing based on the $k^{th}$ fifth feature and the $k^{th}$ fourth feature to obtain a $k^{th}$ sixth feature; and obtain the predictive classification result of the to-be-processed image based on M sixth features; obtaining a target loss based on the predictive classification result and a real classification result of the to-be-processed image, where the target loss is used to indicate a difference between the predictive classification result and the real classification result; and updating a model parameter of the to-be-trained model based on the target loss until a model training condition is met, to obtain a transformer network.

The transformer network obtained based on the foregoing method has a capability of classifying a to-be-classified target image. In an image classification process, the transformer network may calculate a distance between a Q-feature and a K-feature to obtain an attention feature of the target image. Because calculation of the distance between the Q-feature and the K-feature can be implemented by a large quantity of addition operations, the operation of obtaining the attention feature by the transformer network no longer includes a large quantity of multiplication operations, but is replaced by addition operations with relatively low computational overheads. Therefore, the transformer network can be extensively applied to terminal devices with limited computing power.

In a possible implementation, the to-be-trained model is configured to calculate the distance between the $k^{th}$ second feature and the $k^{th}$ third feature based on an addition operation to obtain the $k^{th}$ fifth feature.

In a possible implementation, the $k^{th}$ second feature includes N row vectors, the $k^{th}$ third feature includes N row vectors, and the to-be-trained model is configured to: perform subtraction processing on a $j^{th}$ row vector of the $k^{th}$ second feature and an $i^{th}$ row vector of the $k^{th}$ third feature to obtain a $p^{th}$ first intermediate vector, where j=1, ..., N, i=1, ..., N, and P=1, ..., N×N; perform addition processing on all elements of the $p^{th}$ first intermediate vector to obtain an element in a $j^{th}$ row and an $i^{th}$ column of a $k^{th}$ seventh feature; and perform scaling processing and normalization processing on the $k^{th}$ seventh feature to obtain the $k^{th}$ fifth feature.

In a possible implementation, the to-be-trained model is configured to process an element of the $k^{th}$ fifth feature and an element of the $k^{th}$ fourth feature based on an addition operation to obtain the $k^{th}$ sixth feature.

In a possible implementation, the $k^{th}$ fourth feature includes N×d/M elements, and the to-be-trained model is configured to: perform absolute value processing on an $x^{th}$ column vector of the $k^{th}$ fourth feature to obtain an absolute-value $x^{th}$ column vector of the $k^{th}$ fourth feature; perform addition processing on the absolute-value $x^{th}$ column vector and a $y^{th}$ row vector of the $k^{th}$ fifth feature to obtain a $q^{th}$ second intermediate vector, where x=1, ..., d/M, y=1, ..., N, and h=1, ..., N×d/M; set a sign of the $q^{th}$ second intermediate vector to be the same as a sign of the $x^{th}$ column vector, to obtain a sign-set $q^{th}$ second intermediate vector; and perform addition processing on all elements of the sign-set $q^{th}$ second intermediate vector to obtain an element in a $y^{th}$ row and an $x^{th}$ column of the $k^{th}$ sixth feature.

In a possible implementation, the to-be-trained model is configured to: obtain a first weight matrix, a second weight matrix, and a third weight matrix; perform, by using the first weight matrix, the linear transformation processing formed by addition operations, on the $k^{th}$ first feature to obtain the $k^{th}$ second feature; perform, by using the second weight matrix, the linear transformation processing formed by addition operations, on the $k^{th}$ first feature to obtain the $k^{th}$ third feature; and perform, by using the third weight matrix, the linear transformation processing formed by addition operations, on the $k^{th}$ first feature to obtain the $k^{th}$ fourth feature.

In a possible implementation, the to-be-trained model is further configured to perform addition processing on the $k^{th}$ fifth feature and a preset unit matrix to obtain a $k^{th}$ optimized fifth feature.

In a possible implementation, the to-be-trained model is configured to: perform splicing processing on the M sixth features to obtain an eighth feature of the to-be-processed image; perform second fusion processing, the linear transformation processing formed by addition operations, and normalization processing based on the M first features and the eighth feature, to obtain a ninth feature of the to-be-processed image; and obtain the classification result of the to-be-processed image based on the ninth feature. Further, the second fusion processing includes at least one of addition processing, multiplication processing, subtraction processing, concatenation processing, or concatenation convolution processing.

In a possible implementation, the second fusion processing includes at least one of addition processing, multiplication processing, subtraction processing, concatenation processing, or concatenation convolution processing.

In a possible implementation, sizes of the M first features are the same.

A third aspect of the embodiments of this application provides an image classification method. The method is applied to a terminal device, the terminal device includes a processor, the processor includes an adder circuit, and the method includes: obtaining a target image; processing the target image by using a transformer network, to obtain a classification result of the target image, where the transformer model includes a self-attention module, and an operation of calculating an attention feature of the target image by the self-attention module is implemented by the adder circuit; and displaying the classification result of the target image.

As can be learned from the foregoing method, in an image classification process, the transformer network may calculate a distance between a Q-feature and a K-feature to obtain the attention feature of the target image. Because calculation of the distance between the Q-feature and the K-feature can be implemented by a large quantity of addition operations, the operation of obtaining the attention feature by the transformer network no longer includes a large quantity of multiplication operations, but is replaced by addition operations with relatively low computational overheads. Therefore, the transformer network can be extensively applied to terminal devices with limited computing power.

In a possible implementation, a linear transformation operation of the self-attention module is implemented by the adder circuit.

A fourth aspect of the embodiments of this application provides an image classification method. The method is applied to a terminal device, the terminal device includes a transformer network, the transformer network includes a self-attention module, and the method includes: obtaining a target image; and displaying a classification result of the target image, where the classification result of the target image is determined based on a distance between a second feature and a third feature that are obtained by inputting the target image into the self-attention module, the second feature is a Q-feature, and the third feature is a K-feature.

As can be learned from the foregoing method, in an image classification process, the transformer network may calculate the distance between the Q-feature and the K-feature to obtain an attention feature of the target image. Because calculation of the distance between the Q-feature and the K-feature can be implemented by a large quantity of addition operations, the operation of obtaining the attention feature by the transformer network no longer includes a large quantity of multiplication operations, but is replaced by addition operations with relatively low computational overheads. Therefore, the transformer network can be extensively applied to terminal devices with limited computing power.

In a possible implementation, the distance is an L1 distance or an L2 distance.

A fifth aspect of the embodiments of this application provides an image classification apparatus. The apparatus includes: a first obtaining module, configured to obtain M first features of a target image, where M≥1; a first processing module, configured to perform linear transformation processing based on a $k^{th}$ first feature to obtain a $k^{th}$ second feature, a $k^{th}$ third feature, and a $k^{th}$ fourth feature, where k=1, ..., M; a second processing module, configured to calculate a distance between the $k^{th}$ second feature and the $k^{th}$ third feature to obtain a $k^{th}$ fifth feature; a third processing module, configured to perform first fusion processing based on the $k^{th}$ fifth feature and the $k^{th}$ fourth feature to obtain a $k^{th}$ sixth feature; and a second obtaining module, configured to obtain a classification result of the target image based on M sixth features.

As can be learned from the foregoing apparatus, after obtaining the M first features of the target image, a transformer network may perform linear transformation processing based on the $k^{th}$ first feature to obtain the $k^{th}$ second feature (that is, a Q-feature), the $k^{th}$ third feature (that is, a K-feature), and the $k^{th}$ fourth feature (that is, a V-feature), where k=1, ..., M. Then the transformer network calculates the distance between the $k^{th}$ second feature and the $k^{th}$ third feature to obtain the $k^{th}$ fifth feature (that is, an attention feature). Then the transformer network performs first fusion processing based on the $k^{th}$ fifth feature and the $k^{th}$ fourth feature to obtain the $k^{th}$ sixth feature. After obtaining the M sixth features, the transformer network may obtain the classification result of the target image based on the M sixth features. In the process, because calculation of the distance between the second feature and the third feature can be implemented by a large quantity of addition operations, the operation of obtaining the fifth feature (that is, the attention feature) by the transformer network no longer includes a large quantity of multiplication operations, but is replaced by addition operations with relatively low computational overheads. Therefore, the transformer network can be extensively applied to terminal devices with limited computing power.

In a possible implementation, the second processing module is configured to calculate the distance between the $k^{th}$ second feature and the $k^{th}$ third feature based on an addition operation to obtain the $k^{th}$ fifth feature.

In a possible implementation, the $k^{th}$ second feature includes N row vectors, the $k^{th}$ third feature includes N row vectors, and the second processing module is configured to: perform subtraction processing on a $j^{th}$ row vector of the $k^{th}$ second feature and an $i^{th}$ row vector of the $k^{th}$ third feature to obtain a $p^{th}$ first intermediate vector, where j=1, ..., N, i=1, ..., N, and P=1, ..., N×N; perform addition processing on all elements of the $p^{th}$ first intermediate vector to obtain an element in a $j^{th}$ row and an $i^{th}$ column of a $k^{th}$ seventh feature; and perform scaling processing and normalization processing on the $k^{th}$ seventh feature to obtain the $k^{th}$ fifth feature.

In a possible implementation, the third processing module is configured to process an element of the $k^{th}$ fifth feature and an element of the $k^{th}$ fourth feature based on an addition operation to obtain the $k^{th}$ sixth feature.

In a possible implementation, the $k^{th}$ fourth feature includes N×d/M elements, and the third processing module is configured to: perform absolute value processing on an $x^{th}$ column vector of the $k^{th}$ fourth feature to obtain an absolute-value $x^{th}$ column vector of the $k^{th}$ fourth feature; perform addition processing on the absolute-value $x^{th}$ column vector and a $y^{th}$ row vector of the $k^{th}$ fifth feature to obtain a $q^{th}$ second intermediate vector, where x=1, ..., d/M, y=1, ..., N, and h=1, ..., N×d/M; set a sign of the $q^{th}$ second intermediate vector to be the same as a sign of the $x^{th}$ column vector, to obtain a sign-set $q^{th}$ second intermediate vector; and perform addition processing on all elements of the sign-set $q^{th}$ second intermediate vector to obtain an element in a $y^{th}$ row and an $x^{th}$ column of the $k^{th}$ sixth feature.

In a possible implementation, the first processing module is configured to: obtain a first weight matrix, a second weight matrix, and a third weight matrix; perform, by using the first weight matrix, the linear transformation processing formed by addition operations, on the $k^{th}$ first feature to obtain the $k^{th}$ second feature; perform, by using the second weight matrix, the linear transformation processing formed by addition operations, on the $k^{th}$ first feature to obtain the $k^{th}$ third feature; and perform, by using the third weight matrix, the linear transformation processing formed by addition operations, on the $k^{th}$ first feature to obtain the $k^{th}$ fourth feature.

In a possible implementation, the second obtaining module is configured to: perform splicing processing on the M sixth features to obtain an eighth feature of the target image; perform second fusion processing, the linear transformation processing formed by addition operations, and normalization processing based on the M first features and the eighth feature to obtain a ninth feature of the target image; and obtain the classification result of the target image based on the ninth feature.

In a possible implementation, the second processing module is further configured to perform addition processing on the $k^{th}$ fifth feature and a preset unit matrix to obtain a $k^{th}$ optimized fifth feature.

In a possible implementation, the second fusion processing includes at least one of addition processing, multiplication processing, subtraction processing, concatenation processing, or concatenation convolution processing.

In a possible implementation, sizes of the M first features are the same.

A sixth aspect of the embodiments of this application provides a model training apparatus. The apparatus includes: a first obtaining module, configured to obtain a to-be-processed image; a processing module, configured to input the to-be-processed image into a to-be-trained model to obtain a predictive classification result of the to-be-processed image, where the to-be-trained model is configured to: obtain M first features of the to-be-processed image, where M≥1; perform linear transformation processing based on a $k^{th}$ first feature to obtain a $k^{th}$ second feature, a $k^{th}$ third feature, and a $k^{th}$ fourth feature, where k=1, ..., M; calculate a distance between the $k^{th}$ second feature and the $k^{th}$ third feature to obtain a $k^{th}$ fifth feature; perform first fusion processing based on the $k^{th}$ fifth feature and the $k^{th}$ fourth feature to obtain a $k^{th}$ sixth feature; and obtain the predictive classification result of the to-be-processed image based on M sixth features; a second obtaining module, configured to obtain a target loss based on the predictive classification result and a real classification result of the to-be-processed image, where the target loss is used to indicate a difference between the predictive classification result and the real classification result; and an updating module, configured to update a model parameter of the to-be-trained model based on the target loss until a model training condition is met, to obtain a transformer network. It should be noted that the second obtaining module and the updating module form a training module.

The transformer network obtained based on the foregoing apparatus has a capability of classifying a to-be-classified target image. In an image classification process, the transformer network may calculate a distance between a Q-feature and a K-feature to obtain an attention feature of the target image. Because calculation of the distance between the Q-feature and the K-feature can be implemented by a large quantity of addition operations, the operation of obtaining the attention feature by the transformer network no longer includes a large quantity of multiplication operations, but is replaced by addition operations with relatively low computational overheads. Therefore, the transformer network can be extensively applied to terminal devices with limited computing power.

In a possible implementation, the to-be-trained model is configured to calculate the distance between the $k^{th}$ second feature and the $k^{th}$ third feature based on an addition operation to obtain the $k^{th}$ fifth feature.

In a possible implementation, the $k^{th}$ second feature includes N row vectors, the $k^{th}$ third feature includes N row vectors, and the to-be-trained model is configured to: perform subtraction processing on a $j^{th}$ row vector of the $k^{th}$ second feature and an $i^{th}$ row vector of the $k^{th}$ third feature to obtain a $p^{th}$ first intermediate vector, where $j=1, ..., N$, $i=1, ..., N$, and $P=1, ..., N\times N$; perform addition processing on all elements of the $p^{th}$ first intermediate vector to obtain an element in a $j^{th}$ row and an $i^{th}$ column of a $k^{th}$ seventh feature; and perform scaling processing and normalization processing on the $k^{th}$ seventh feature to obtain the $k^{th}$ fifth feature.

In a possible implementation, the to-be-trained model is configured to process an element of the $k^{th}$ fifth feature and an element of the $k^{th}$ fourth feature based on an addition operation to obtain the $k^{th}$ sixth feature.

In a possible implementation, the $k^{th}$ fourth feature includes $N\times d/M$ elements, and the to-be-trained model is configured to: perform absolute value processing on an $x^{th}$ column vector of the $k^{th}$ fourth feature to obtain an absolute-value $x^{th}$ column vector of the $k^{th}$ fourth feature; perform addition processing on the absolute-value $x^{th}$ column vector and a $y^{th}$ row vector of the $k^{th}$ fifth feature to obtain a $q^{th}$ second intermediate vector, where $x=1, ..., d/M$, $y=1, ..., N$, and $h=1, ..., N\times d/M$; set a sign of the $q^{th}$ second intermediate vector to be the same as a sign of the $x^{th}$ column vector, to obtain a sign-set $q^{th}$ second intermediate vector; and perform addition processing on all elements of the sign-set $q^{th}$ second intermediate vector to obtain an element in a $y^{th}$ row and an $x^{th}$ column of the $k^{th}$ sixth feature.

In a possible implementation, the to-be-trained model is configured to: obtain a first weight matrix, a second weight matrix, and a third weight matrix; perform, by using the first weight matrix, the linear transformation processing formed by addition operations, on the $k^{th}$ first feature to obtain the $k^{th}$ second feature; perform, by using the second weight matrix, the linear transformation processing formed by addition operations, on the $k^{th}$ first feature to obtain the $k^{th}$ third feature; and perform, by using the third weight matrix, the linear transformation processing formed by addition operations, on the $k^{th}$ first feature to obtain the $k^{th}$ fourth feature.

In a possible implementation, the to-be-trained model is configured to: perform splicing processing on the M sixth features to obtain an eighth feature of the to-be-processed image; perform second fusion processing, the linear transformation processing formed by addition operations, and normalization processing based on the M first features and the eighth feature, to obtain a ninth feature of the to-be-processed image; and obtain the classification result of the to-be-processed image based on the ninth feature.

In a possible implementation, the to-be-trained model is further configured to perform addition processing on the $k^{th}$ fifth feature and a preset unit matrix to obtain a $k^{th}$ optimized fifth feature.

In a possible implementation, the second fusion processing includes at least one of addition processing, multiplication processing, subtraction processing, concatenation processing, or concatenation convolution processing.

In a possible implementation, sizes of the M first features are the same.

A seventh aspect of the embodiments of this application provides an image classification apparatus. The apparatus is deployed on a terminal device, the terminal device includes a transformer network, the transformer network includes a self-attention module, and the apparatus includes: an obtaining module, configured to obtain a target image; and a display module, configured to display a classification result of the target image, where the classification result of the target image is determined based on a distance between a second feature and a third feature that are obtained by inputting the target image into the self-attention module, the second feature is a Q-feature, and the third feature is a K-feature.

As can be learned from the foregoing apparatus, in an image classification process, the transformer network may calculate the distance between the Q-feature and the K-feature to obtain an attention feature of the target image. Because calculation of the distance between the Q-feature and the K-feature can be implemented by a large quantity of addition operations, the operation of obtaining the attention feature by the transformer network no longer includes a large quantity of multiplication operations, but is replaced by addition operations with relatively low computational overheads. Therefore, the transformer network can be extensively applied to terminal devices with limited computing power.

In a possible implementation, the distance is an L1 distance or an L2 distance.

An eighth aspect of the embodiments of this application provides an image classification apparatus. The apparatus includes a memory and a processor. The memory stores code, the processor is configured to execute the code, and when the code is executed, the image classification apparatus performs the method according to any one of the first aspect or the possible implementations of the first aspect, any one of the third aspect or the possible implementations of the third aspect, or any one of the fourth aspect or the possible implementations of the fourth aspect.

A ninth aspect of the embodiments of this application provides a model training apparatus. The apparatus includes a memory and a processor. The memory stores code, the processor is configured to execute the code, and when the code is executed, the model training apparatus performs the method according to any one of the second aspect or the possible implementations of the second aspect.

A tenth aspect of the embodiments of this application provides a circuit system. The circuit system includes a processing circuit. The processing circuit is configured to perform the method according to any one of the first aspect or the possible implementations of the first aspect, any one of the second aspect or the possible implementations of the second aspect, any one of the third aspect or the possible implementations of the third aspect, or any one of the fourth aspect or the possible implementations of the fourth aspect.

An eleventh aspect of the embodiments of this application provides a system-on-a-chip. The system-on-a-chip includes a processor, configured to invoke a computer program or computer instructions stored in a memory, so that the processor performs the method according to any one of the first aspect or the possible implementations of the first aspect, any one of the second aspect or the possible implementations of the second aspect, any one of the third aspect or the possible implementations of the third aspect, or any one of the fourth aspect or the possible implementations of the fourth aspect.

In a possible implementation, the processor is coupled to the memory by using an interface.

In a possible implementation, the system-on-a-chip further includes the memory, and the memory stores the computer program or the computer instructions.

A twelfth aspect of the embodiments of this application provides a computer storage medium. The computer storage medium stores a computer program. When the program is executed by a computer, the computer is enabled to implement the method according to any one of the first aspect or the possible implementations of the first aspect, any one of the second aspect or the possible implementations of the second aspect, any one of the third aspect or the possible implementations of the third aspect, or any one of the fourth aspect or the possible implementations of the fourth aspect.

A thirteenth aspect of the embodiments of this application provides a computer program product. The computer program product stores instructions. When the instructions are executed by a computer, the computer is enabled to implement the method according to any one of the first aspect or the possible implementations of the first aspect, any one of the second aspect or the possible implementations of the second aspect, any one of the third aspect or the possible implementations of the third aspect, or any one of the fourth aspect or the possible implementations of the fourth aspect.

In the embodiments of this application, after obtaining the M first features of the target image, the transformer network may perform linear transformation processing based on the $k^{th}$ first feature to obtain the $k^{th}$ second feature (that is, the Q-feature), the $k^{th}$ third feature (that is, the K-feature), and the $k^{th}$ fourth feature (that is, the V-feature), where k=1, ..., M. Then the transformer network calculates the distance between the $k^{th}$ second feature and the $k^{th}$ third feature to obtain the $k^{th}$ fifth feature (that is, the attention feature). Then the transformer network performs first fusion processing based on the $k^{th}$ fifth feature and the $k^{th}$ fourth feature to obtain the $k^{th}$ sixth feature. After obtaining the M sixth features, the transformer network may obtain the classification result of the target image based on the M sixth features. In the process, because calculation of the distance between the second feature and the third feature can be implemented by a large quantity of addition operations, the operation of obtaining the fifth feature (that is, the attention feature) by the transformer network no longer includes a large quantity of multiplication operations, but is replaced by addition operations with relatively low computational overheads. Therefore, the transformer network can be extensively applied to terminal devices with limited computing power.

## BRIEF DESCRIPTION OF DRAWINGS

FIG. 1 is a schematic diagram of a structure of an artificial intelligence main framework;
FIG. 2a is a schematic diagram of a structure of an image processing system according to an embodiment of this application;
FIG. 2b is a schematic diagram of another structure of an image processing system according to an embodiment of this application;
FIG. 2c is a schematic diagram of an image processing related device according to an embodiment of this application;
FIG. 3 is a schematic diagram of an architecture of a system 100 according to an embodiment of this application;
FIG. 4 is a schematic flowchart of an image classification method according to an embodiment of this application;
FIG. 5 is another schematic flowchart of an image classification method according to an embodiment of this application;
FIG. 6 is a schematic flowchart of an image classification method according to an embodiment of this application;
FIG. 7 is a schematic diagram of a structure of a transformer network according to an embodiment of this application;
FIG. 8 is a schematic diagram of a structure of a multi-head self-attention module according to an embodiment of this application;
FIG. 9 is a schematic diagram of linear transformation processing formed by addition operations according to an embodiment of this application;
FIG. 10 is a schematic diagram of observation data according to an embodiment of this application;
FIG. 11 is a schematic diagram of a feedforward module according to an embodiment of this application;
FIG. 12 is a schematic diagram of a feature visualization result of a neural network model in a conventional technology 1;

FIG. 13 is a schematic diagram of a feature visualization result of a neural network model in a conventional technology 2;

FIG. 14 is a schematic diagram of a feature visualization result of a transformer network according to an embodiment of this application;

FIG. 15 is a schematic flowchart of a model training method according to an embodiment of this application;

FIG. 16 is a schematic diagram of a structure of an image classification apparatus according to an embodiment of this application;

FIG. 17 is a schematic diagram of a structure of a model training apparatus according to an embodiment of this application;

FIG. 18 is a schematic diagram of another structure of an image classification apparatus according to an embodiment of this application;

FIG. 19 is a schematic diagram of a structure of an execution device according to an embodiment of this application;

FIG. 20 is a schematic diagram of a structure of a training device according to an embodiment of this application; and

FIG. 21 is a schematic diagram of a structure of a chip according to an embodiment of this application.

## DETAILED DESCRIPTION OF EMBODIMENTS

Embodiments of this application provide an image classification method and a related device thereof, so that an operation of obtaining an attention feature by a transformer network no longer includes a large quantity of multiplication operations but are replaced by addition operations with relatively low computational overheads. Therefore, the transformer network can be extensively applied to terminal devices with limited computing power.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have", and any other variant thereof are intended to cover a non-exclusive inclusion, so that a process, method, system, product, or device that includes a series of units is not necessarily limited to those units, but may include another unit not clearly listed or inherent to such a process, method, system, product, or device.

Image classification is one of important tasks of computer vision, and has important applications in fields such as autonomous driving and industrial vision. A transformer network is a neural network constructed based on a self-attention (self-attention) mechanism. Thanks to high performance of the model in image classification and other tasks, the model has drawn extensive attention.

Currently, after a to-be-classified target image is input into the transformer network, the transformer network may first perform linear transformation processing on the target image to obtain a Q-feature, a K-feature, and a V-feature of the target image. The transformer network may perform fusion processing on the Q-feature and the K-feature to obtain an A-feature (attention feature) of the target image. Then, the transformer network may perform fusion processing on the A-feature and the V-feature of the target image, and then obtain a classification result of the target image based on a fused feature, to determine a category of the target image.

However, an operation (for example, linear transformation processing and fusion processing) of obtaining the attention feature of the target image by the transformer network usually includes a large quantity of multiplication operations, and requires high computational overheads. As a result, it is difficult to apply the transformer network to terminal devices with limited computing power.

To resolve the foregoing problem, this application provides an image classification method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology achieves an optimal result by perceiving an environment, obtaining knowledge, and using the knowledge. In other words, the artificial intelligence technology is a branch of computer science and is intended to understand essence of intelligence and produce a new intelligent machine that can react in a manner similar to human intelligence. Using artificial intelligence for image processing is a common application of artificial intelligence.

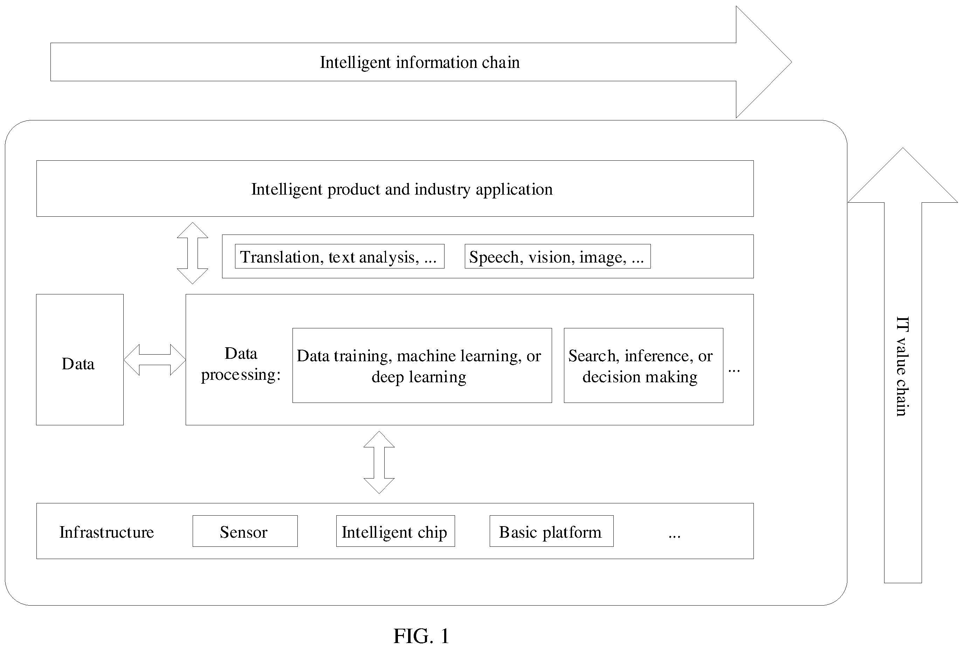

An overall working procedure of an artificial intelligence system is first described. FIG. 1 is a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms, for example, a distributed computing framework and a network, for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formal information according to an inference control policy. A typical function is searching and matching.
Decision making is a process of making a decision after intelligent information is inferred, and usually provides functions such as classification, ranking, and prediction.

(4) General capability

After data processing mentioned above is performed on data, some general capabilities, for example, an algorithm or a general system, such as translation, text analysis, computer vision processing, speech recognition, or image recognition, may be further formed based on a data processing result.

(5) Intelligent product and industry application

The intelligent product and the industry application are a product and an application of the artificial intelligence system in various fields, and are package of an overall solution of the artificial intelligence, so that decision making for intelligent information is productized and that the application is implemented. Application fields mainly include intelligent terminals, intelligent transportation, intelligent health care, autonomous driving, a smart city, and the like.
The following describes several application scenarios of this application.

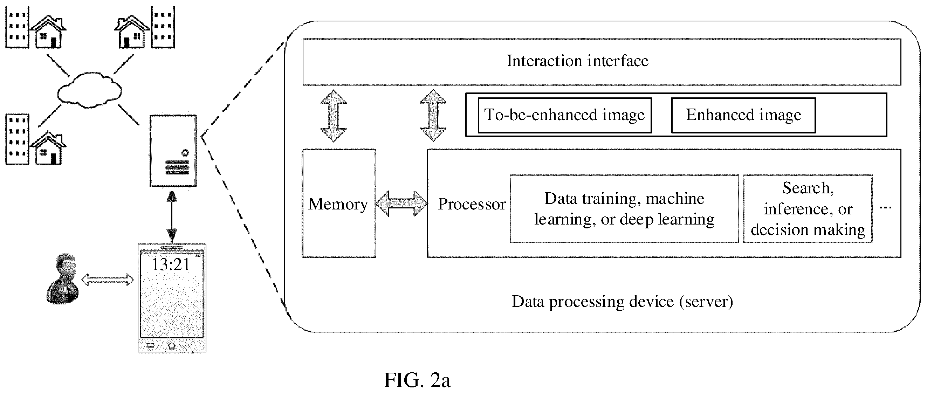

FIG. 2a is a schematic diagram of a structure of an image processing system according to an embodiment of this application. The image processing system includes user equipment and a data processing device. The user equipment includes an intelligent terminal such as a mobile phone, a personal computer, or an information processing center. The user equipment is an image processing initiator, and is used as an initiator of an image processing request. Usually, a user initiates a request by using the user equipment.
The data processing device may be a device or a server with a data processing function, such as a cloud server, a network server, an application server, or a management server. The data processing device receives an image processing request from the intelligent terminal by using an interaction interface, and then performs image processing in such manners as machine learning, deep learning, searching, inference, and decision making by using a data storage memory and a data processing processor. The memory in the data processing device may be a general term, including a local memory and a database that stores historical data. The database may be in the data processing device, or may be in another network server.

In the image processing system shown in FIG. 2a, the user equipment may receive an instruction of the user. For example, the user equipment may obtain an image entered or selected by the user, and then initiate a request to the data processing device, so that the data processing device performs an image processing application (for example, image classification) on the image obtained by the user equipment, to obtain a corresponding processing result for the image. For example, the user equipment may obtain an image entered by the user, and then initiate an image classification request to the data processing device, so that the data processing device classifies the image. In this way, the user equipment obtains a classification result of the image (that is, a category of the image), and displays the classification result of the image for the user to view and use.

In FIG. 2a, the data processing device may perform an image classification method according to an embodiment of this application.

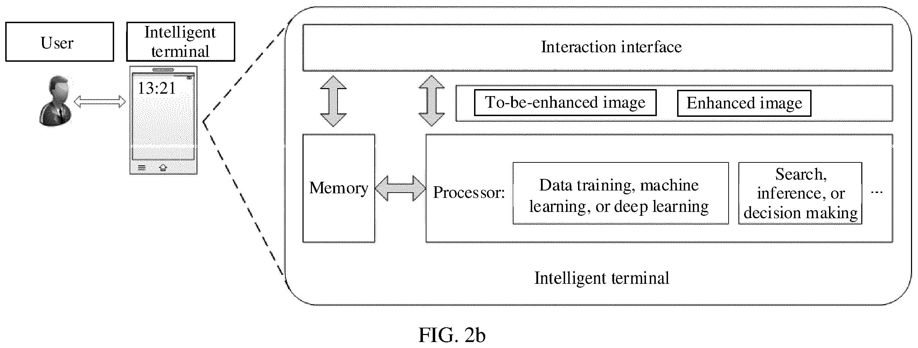

FIG. 2b is a schematic diagram of another structure of an image processing system according to an embodiment of this application. In FIG. 2b, user equipment is directly used as a data processing device. The user equipment can directly obtain an input from a user and directly process the input by using hardware of the user equipment. A specific process is similar to that in FIG. 2a. For details, refer to the foregoing descriptions. Details are not described herein again.

In the image processing system shown in FIG. 2b, the user equipment may receive an instruction of the user. For example, the user equipment may obtain an image selected by the user from the user equipment, and then the user equipment performs an image processing application (for example, image classification) on the image. In this way, the user equipment obtains a corresponding processing result for the image, and displays the processing result for the user to view and use.

In FIG. 2b, the user equipment may perform an image processing method according to an embodiment of this application.

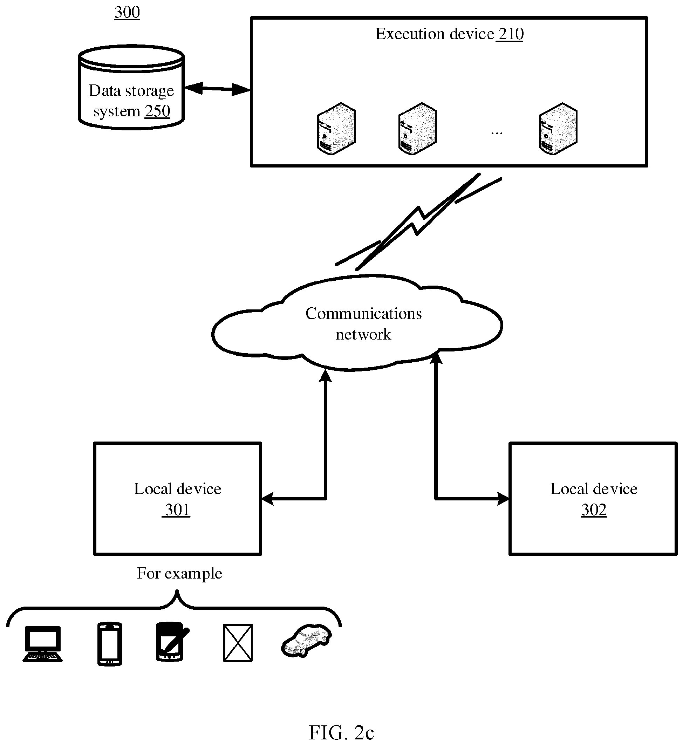

FIG. 2c is a schematic diagram of an image processing related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated on the execution device 210, or may be disposed on a cloud or another network server.

The processor in FIG. 2a and FIG. 2b may perform data training, machine learning, or deep learning by using a neural network model or another model (for example, a model based on a support vector machine), and perform an image processing application on an image by using a model obtained through data training or learning, to obtain a corresponding processing result.

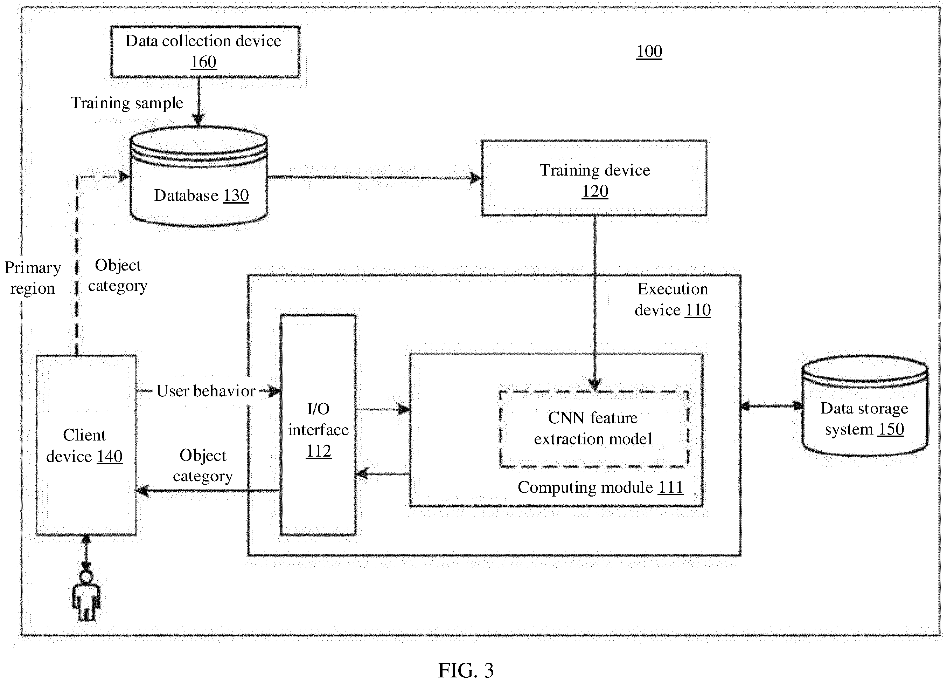

FIG. 3 is a schematic diagram of an architecture of a system 100 according to an embodiment of this application. In FIG. 3, an execution device 110 is provided with an input/output (input/output, I/O) interface 112, configured to exchange data with an external device. A user may input data to the I/O interface 112 by using a client device 140. The input data in this embodiment of this application may include each to-be-scheduled task, a resource that can be invoked, and another parameter.

In a process in which the execution device 110 preprocesses the input data, or in a process in which a computing module 111 of the execution device 110 performs related processing such as computing (for example, implementing a function of a neural network in this application), the execution device 110 may invoke data, code, and the like in a data storage system 150 for corresponding processing, and may further store, in the data storage system 150, data, an instruction, and the like that are obtained through the corresponding processing.

Finally, the I/O interface 112 returns a processing result to the client device 140, and provides the processing result to the user.

It should be noted that a training device 120 may generate corresponding target models/rules for different targets or different tasks based on different training data. The corresponding target models/rules may be used to implement the foregoing targets or complete the foregoing tasks, to provide a required result for the user. The training data may be stored in a database 130, and is a training sample collected by a data collection device 160.

In a case shown in FIG. 3, the user may manually input data and the user may input the data on an interface provided by the I/O interface 112. In another case, the client device 140 may automatically send input data to the I/O interface 112. If it is required that the client device 140 needs to obtain authorization from the user to automatically send the input data, the user may set a corresponding permission on the client device 140. The user may view, on the client device 140, a result output by the execution device 110. Specifically, the result may be presented in a form of a display, a sound, an action, or the like. The client device 140 may alternatively be used as a data collection end to collect, as new sample data, input data that is input to the I/O interface 112 and an output result that is output from the I/O interface 112 as shown in the figure, and store the new sample data in the database 130. Certainly, the client device 140 may alternatively not perform collection. Instead, the I/O interface 112 directly stores, as new sample data in the database 130, input data that is input to the I/O interface 112 and an output result that is output from the I/O interface 112.

It should be noted that FIG. 3 is merely a schematic diagram of the system architecture according to this embodiment of this application. A location relationship between devices, components, modules, and the like shown in the figure constitutes no limitation. For example, in FIG. 3, the data storage system 150 is an external memory relative to the execution device 110. In another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete computing work of the computing module 111. Alternatively, the chip may be disposed in the training device 120 shown in FIG. 3, to complete training work of the training device 120 and output a target model/rule.

The neural network processing unit NPU serves as a coprocessor, and the NPU is mounted to a host central processing unit (central processing unit, CPU) (host CPU). The host CPU assigns a task. A core part of the NPU is an arithmetic circuit. A controller controls the arithmetic circuit to extract data in a memory (a weight memory or an input memory) and perform an operation.

In some implementations, the arithmetic circuit internally includes a plurality of processing units (process engine, PE). In some implementations, the arithmetic circuit is a two-dimensional systolic array. The arithmetic circuit may alternatively be a one-dimensional systolic array or another electronic circuit capable of performing mathematical operations such as multiplication and addition. In some implementations, the arithmetic circuit is a general-purpose matrix processor.

For example, it is assumed that there is an input matrix A, a weight matrix B, and an output matrix C. The arithmetic circuit fetches, from the weight memory, data corresponding to the matrix B, and buffers the data on each PE in the arithmetic circuit. The arithmetic circuit fetches data of the matrix A from an input memory, performs a matrix operation on the data with the matrix B, and stores an obtained partial result or final result of the matrix in an accumulator (accumulator).

It should be noted that, in this embodiment of this application, the arithmetic circuit of the NPU is mainly configured to implement a large quantity of addition operations and a small quantity of multiplication operations. To be specific, the arithmetic circuit may be considered as including an adder circuit part and a multiplication circuit part. The adder circuit may be configured to implement various processing such as attention feature calculation (including calculation of a distance between two matrices), linear transformation formed by an addition operation, and matrix fusion. Details are not described herein.

A vector calculation unit may perform further processing such as vector multiplication, vector addition, an exponential operation, a logarithmic operation, or value comparison on an output of the arithmetic circuit. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store a processed output vector in a unified buffer. For example, the vector calculation unit may apply a nonlinear function to the output of the arithmetic circuit, for example, accumulate value vectors to generate an activation value. In some implementations, the vector calculation unit generates a normalized value, a combined value, or both. In some implementations, the processed output vector can be used as an activation input to the arithmetic circuit. For example, the processed output vector can be used at a subsequent layer of the neural network.

A unified memory is configured to store input data and output data.

For weight data, a direct memory access controller (direct memory access controller, DMAC) directly transfers input data in the external memory to the input memory and/or the unified memory, stores weight data in the external memory in the weight memory, and stores data in the unified memory in the external memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions buffered in the instruction fetch buffer, to control a working process of the arithmetic accelerator.

Generally, the unified memory, the input memory, the weight memory, and the instruction fetch buffer may all be on-chip (on-chip) memories. The external memory may be a memory outside the NPU, and the external memory may be a double data rate synchronous dynamic random access memory (double data rate synchronous dynamic random access memory, DDR SDRAM), a high bandwidth memory (high bandwidth memory, HBM), or another readable and writable memory.

Because the embodiments of this application relate to massive neural network applications, for ease of understanding, the following first describes terms and concepts related to the neural network in the embodiments of this application.

(1) Neural network

The neural network may include a neuron. The neuron may be an arithmetic unit that uses xs and an intercept of 1 as an input. An output of the arithmetic unit may be as follows:

$$h_{W,b}\left(x\right) = f\left(W^{T}x\right) = f(\sum\nolimits_{s=1}^{n} W_{s} x_{s} + b)$$

(1)

where s=1, 2, ..., n, n is a natural number greater than 1, Ws is a weight of xs, and b is a bias of the neuron; and f is an activation function (activation functions) of the neuron, and is used to introduce a nonlinear feature into the neural network, to convert an input signal in the neuron into an output signal. The output signal of the activation function may serve as an input of a next convolutional layer. The activation function may be a sigmoid function. The neural network is a network formed by connecting a plurality of single neurons together, that is, an output of one neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx+b)$. From a physical layer, work at each layer of the neural network may be understood as completing transformation from input space to output space (that is, from row space to column space of a matrix) by performing five operations on the input space (a set of input vectors). The five operations include: 1. dimension increasing or dimension reduction; 2. scaling up/down; 3. rotation; 4. translation; and 5. "bending". The operation 1, the operation 2, and the operation 3 are performed by $Wx$, the operation 4 is performed by $+b$, and the operation 5 is performed by $a()$. The word "space" is used herein for expression because a classified object is not a single thing, but a type of thing. Space is a set of all individuals of this type of thing. $W$ is a weight vector, and each value in the vector indicates a weight value of one neuron at this layer of the neural network. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, the training process of the neural network is essentially a manner of learning control of space transformation, and more specifically, learning a weight matrix.

Because it is expected that an output of the neural network is as close as possible to an expected value that is actually desired, a current predicted value of the network may be compared with a target value that is actually desired, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to reduce the predicted value until the neural network can predict the target value that is actually desired. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

The neural network may use an error back propagation (back propagation, BP) algorithm to correct a value of a parameter in an initial neural network model in a training process, so that a reconstruction error loss of the neural network model becomes smaller. Specifically, an input signal is subject to an error loss during forward transfer until the signal is output, and the parameter in the initial neural network model is updated based on back propagation of error loss information, so that the error loss converges. The back propagation algorithm is an error-loss-centered back propagation motion intended to obtain a parameter, such as a weight matrix, of an optimal neural network model.

The following describes the method provided in this application from a neural network training side and a neural network application side.

A model training method provided in an embodiment of this application relates to image processing, and may be specifically applied to data processing methods such as data training, machine learning, and deep learning. Symbolic and formal intelligent information modeling, extraction, preprocessing, training, and the like are performed on training data (for example, a to-be-processed image in this application), to finally obtain a trained neural network (for example, a transformer network in this application). In addition, the trained neural network may be used in an image classification method provided in an embodiment of this application, input data (for example, a target image in this application) is input into the trained neural network, and output data (for example, a classification result of the target image in this application) is obtained. It should be noted that the model training method and the image classification method provided in the embodiments of this application are invented based on a same concept, and may also be understood as two parts of a system, or two stages of an overall process, for example, a model training stage and a model application stage.

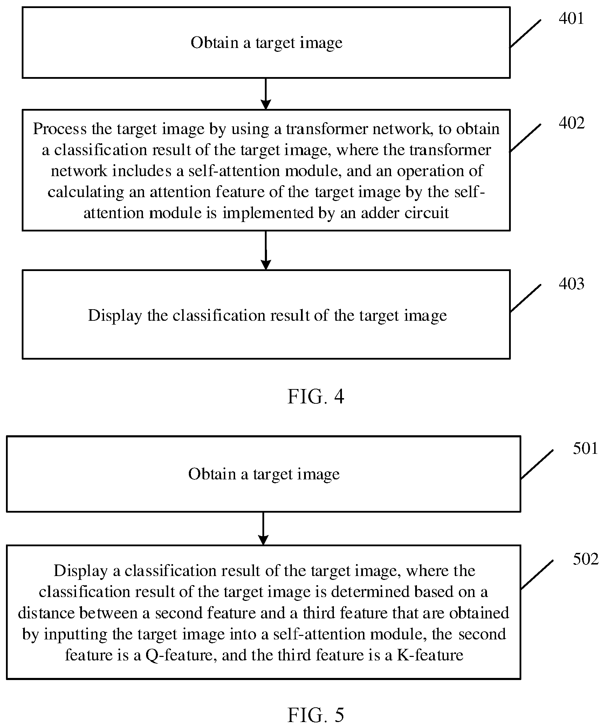

FIG. 4 is a schematic flowchart of an image classification method according to an embodiment of this application. As shown in FIG. 4, the method may be implemented by using a terminal device. For example, a user directly performs image classification on a target image by using the terminal device, to obtain a classification result of the target image. The terminal device may be a wearable device (for example, smart glasses, a smart band, or a smart helmet) in an augmented reality (augmented reality, AR) scenario or a virtual reality (virtual reality, VR) scenario, or may be an unmanned aerial vehicle in a flight scenario, or may be an in-vehicle device (for example, a telematics box (telematics box, T-BOX)) on a vehicle in a manual driving scenario or an autonomous driving scenario, or the like. The terminal device is provided with a component having an adder circuit. The component may be various common processors (for example, a CPU, a GPU, an NPU, and a TPU), or may be a memory and a network interface controller (network interface controller, NIC), or may be an unload card (the unload card may be implemented in a plurality of forms; for example, the unload card may be an application-specific integrated circuit (application specific integrated circuit, ASIC) chip, or a combination of a field programmable gate array (field programmable gate array, FPGA) and an ARM chip). In addition, the method may be further implemented by using a cloud service system including a terminal device and a cloud server. For example, when a user needs to classify a target image, the terminal device may be used to send an image classification request to the remote cloud server, where the request includes the target image. Therefore, the cloud server can perform image classification on the target image based on the image classification request, and feed back an obtained classification result of the target image to the terminal device for use by the user. For ease of description, the following describes the method implemented by the terminal device. The method includes the following steps.

401. Obtain a target image.

In this embodiment, the user may send a shooting instruction to the terminal device, so that the terminal device implements an image shooting function based on the shooting instruction. After obtaining the target image by using a camera, the terminal device may present the target image on a display screen for the user to view. To determine a category of the target image, that is, a category of at least one object presented by the target image, the user may further send an image classification instruction to the terminal device, so that the terminal device performs image classification processing on the target image based on the image classification instruction.

For example, the user uses a mobile phone to shoot an image of a tree. If the user wants to determine a category of the tree, the user may send an image classification instruction to the mobile phone, so that the mobile phone performs image classification processing on the image presenting the tree.

402. Process the target image by using a transformer network, to obtain a classification result of the target image, where the transformer network includes a self-attention module, and an operation of calculating an attention feature of the target image by the self-attention module is implemented by the adder circuit.

After receiving the image classification instruction, the terminal device may determine that image classification processing needs to be performed on the target instruction. Specifically, the transformer network is deployed on the terminal device. Therefore, the terminal device can process the target image by using the transformer network, to obtain the classification result of the target image. The transformer network includes the self-attention module. The operation of calculating the attention feature of the target image by the self-attention module may be implemented by the adder circuit in the terminal device. The attention feature obtained by the self-attention module through calculation is used to determine the classification result of the target image. Further, a linear transformation operation of the self-attention module may also be implemented by the adder circuit, and a result obtained by performing linear transformation by the self-attention module is used to calculate the attention feature.

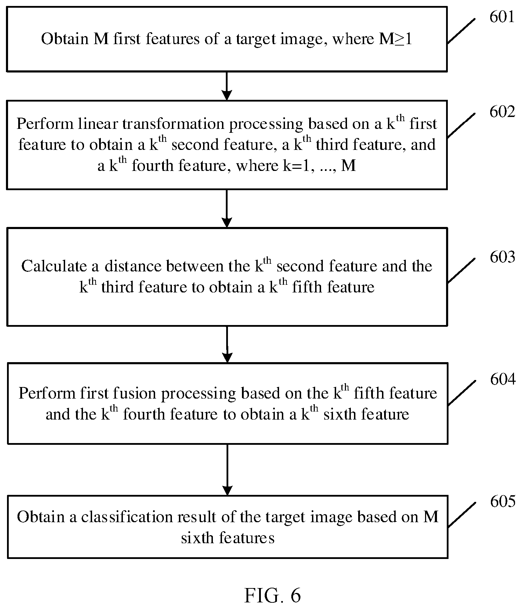

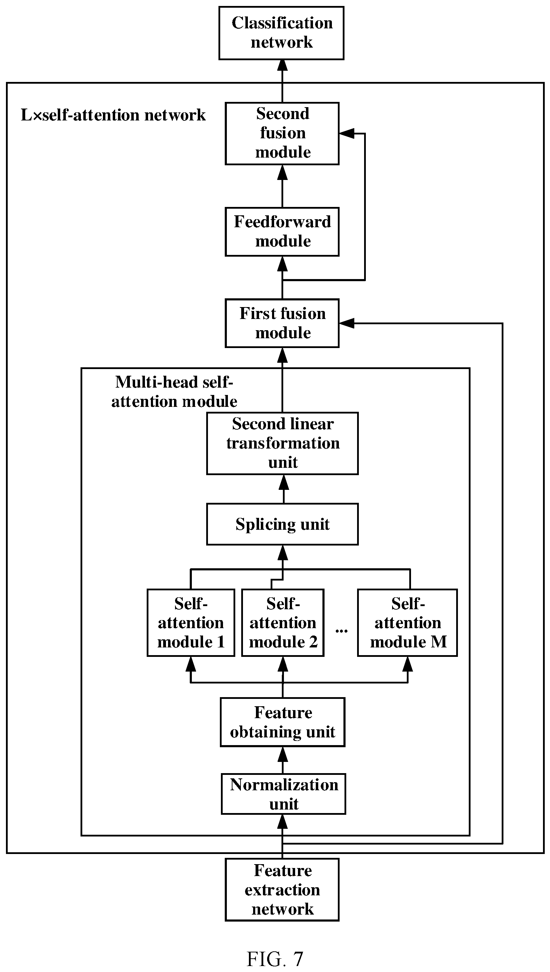

For a structure of the transformer network, refer to related descriptions in the subsequent embodiment shown in FIG. 7. For the operation of calculating the attention feature of the target image by the self-attention module and the linear transformation operation, refer to related descriptions in step 602 and step 603 in the subsequent embodiment shown in FIG. 6. Details are not described herein.

Still in the foregoing example, in a process in which the mobile phone processes the image presenting the tree, a series of addition operations (implemented based on an adder circuit in the mobile phone) may be implemented on the image by using a transformer network, to obtain an attention feature of the image, and then a classification result of the image is obtained based on the attention feature of the image. For example, the tree presented by the image is a poplar.

403. Display the classification result of the target image.

After obtaining the classification result of the target image (that is, the category of the at least one object presented in the target image), the terminal device may display the classification result on the display screen for the user to view and use.

Still in the foregoing example, after the classification result of the image is obtained, the mobile phone may display, on the display screen, that the category of the tree presented by the image is a poplar. In this way, the user can determine, based on the classification result of the image displayed by the mobile phone, that an object photographed by the user is a poplar.

In this embodiment of this application, the operation of obtaining the attention feature by the transformer network no longer includes a large quantity of multiplication operations but are replaced by addition operations with relatively low computational overheads. Therefore, the transformer network can be extensively applied to terminal devices with limited computing power.

For further understanding the process of obtaining the attention feature by the transformer network, the following further describes the process with reference to FIG. 5. FIG. 5 is another schematic flowchart of an image classification method according to an embodiment of this application. As shown in FIG. 5, the method is applied to a terminal device, the terminal device includes a transformer network, the transformer network includes a self-attention module, and the method includes the following steps.

501. Obtain a target image.

In this embodiment, a user may send a shooting instruction to the terminal device, so that the terminal device implements an image shooting function based on the shooting instruction. After obtaining the target image by using a camera, the terminal device may present the target image on a display screen for the user to view. To determine a category of the target image, that is, a category of at least one object presented by the target image, the user may further send an image classification instruction to the terminal device, so that the terminal device performs image classification processing on the target image based on the image classification instruction.

For example, the user uses a mobile phone to shoot an image of a tree. If the user wants to determine a category of the tree, the user may send an image classification instruction to the mobile phone, so that the mobile phone performs image classification processing on the image presenting the tree.

502. Display a classification result of the target image, where the classification result of the target image is determined based on a distance between a second feature and a third feature that are obtained by inputting the target image into the self-attention module, the second feature is a Q-feature, and the third feature is a K-feature.

After receiving the image classification instruction, the terminal device may determine that image classification processing needs to be performed on the target instruction. Specifically, the transformer network is deployed on the terminal device. Therefore, the terminal device can process the target image by using the transformer network, to obtain the classification result of the target image. The transformer network is a neural network model constructed based on a self-attention mechanism. Therefore, the transformer network can perform linear transformation processing formed by addition operations, on the target image to obtain the Q-feature, the K-feature, and a V-feature of the target image. Then the transformer network calculates a distance between the Q-feature and the K-feature based on an addition operation to obtain an attention feature of the target image. Then the transformer network performs fusion processing on the attention feature of the target image and the V-feature of the target image based on the addition operation, and obtains the classification result of the target image based on a result obtained through the fusion processing. Further, the distance between the Q-feature and the K-feature may be an L1 distance (L1 distance) or an L2 distance (L2 distance).

For a structure of the transformer network, refer to related descriptions in the embodiment shown in FIG. 5. For the process of obtaining the Q-feature, the K-feature, and the V-feature of the target image by the self-attention module, the process of calculating the distance between the Q-feature and the K-feature, the process of obtaining the attention feature based on the distance, and the process of obtaining the classification result of the target image based on the attention feature and the V-feature, refer to related descriptions in step 602 to step 605 in the embodiment shown in FIG. 6. Details are not described herein again.

After obtaining the classification result of the target image (that is, the category of the at least one object presented in the target image), the terminal device may display the classification result on the display screen for the user to view and use.

Still in the foregoing example, in the process of processing the image presenting the tree, the mobile phone may perform linear transformation processing formed by addition operations, on the image by using a transformer network, to obtain a Q-feature, a K-feature, and a V-feature of the image, calculate a distance between the Q-feature and the K-feature based on the addition operation to obtain an attention feature of the image, then perform fusion processing on the attention feature and the V-feature of the image based on an addition operation, and obtain a classification result of the image based on a fusion result. For example, the tree presented by the image is a poplar.

After the classification result of the image is obtained, the mobile phone may display, on the display screen, that the category of the tree presented by the image is a poplar. In this way, the user can determine, based on the classification result of the image displayed by the mobile phone, that an object photographed by the user is a poplar.

In this embodiment of this application, in an image classification process, the transformer network may calculate the distance between the Q-feature and the K-feature to obtain the attention feature of the target image. Because calculation of the distance between the Q-feature and the K-feature can be implemented by a large quantity of addition operations, the operation of obtaining the attention feature by the transformer network no longer includes a large quantity of multiplication operations, but is replaced by addition operations with relatively low computational overheads. Therefore, the transformer network can be extensively applied to terminal devices with limited computing power.

For further understanding a working procedure of the transformer network, the following describes, in detail with reference to FIG. 6 and FIG. 7, the image classification method and the transformer network provided in this application. FIG. 6 is another schematic flowchart of an image classification method according to an embodiment of this application. In the method, a transformer network may be used to determine a target image, to determine a category of the target image, that is, a category of an object presented in the target image. A structure of the transformer network is shown in FIG. 7 (FIG. 7 is a schematic diagram of the structure of the transformer network according to this embodiment of this application). The transformer network may include a feature extraction network, a self-attention network, and a classification network. An input end of the self-attention network is connected to an output end of the feature extraction network, and an output end of the self-attention network is connected to an input end of the classification network. The self-attention network may include a multi-head self-attention (multi-head self-attention) module, a first fusion module, a feedforward module, and a second fusion module. An output end of the multi-head self-attention module is connected to a first input end of the first fusion module, an input end of the multi-head self-attention module is connected to a second input end of the first fusion module, an output end of the first fusion module is connected to an input end of the feedforward module, an output end of the feedforward module is connected to a first input end of the second fusion module, and the input end of the feedforward module is connected to a second input end of the second fusion module. The method includes the following steps.

601. Obtain M first features of a target image, where M≥1.

In this embodiment, when a category of the target image needs to be determined, the target image may be input into the transformer network. Specifically, after the feature extraction network of the transformer network receives the target image, the feature extraction network may first divide the target image into N sub-images, where sizes of the N sub-images are the same. Then the feature extraction network processes (for example, scaling processing and encoding processing are performed) the N sub-images to obtain N vectors, where each vector includes d elements (that is, each vector may be considered as a d-dimensional vector). Then the feature extraction network may perform splicing processing on the N vectors to obtain an N×d matrix, that is, an original feature X of the target image, where $X \in R^{N \times d}$.

After obtaining the original feature X of the target image, the feature extraction network may input the original feature X into the multi-head self-attention module of the self-attention network. The multi-head self-attention module may include a normalization unit, a feature obtaining unit, a splicing unit, a second linear transformation unit, and M parallel self-attention modules. An output end of the normalization unit is connected to an input end of the feature obtaining unit, an output end of the feature obtaining unit is connected to input ends of the M self-attention modules, output ends of the M self-attention modules are connected to an input end of the splicing unit, and an output end of the splicing unit is connected to an input end of the second linear transformation unit, where M is an integer greater than or equal to 1.

After the normalization unit of the multi-head self-attention module receives the original feature X, the normalization unit may first perform normalization processing on the original feature X to obtain a normalized original feature X'. It may be understood that the normalization processing may change a value of each element in the original feature X, to avoid a case in which an excessively large value of an element in the feature causes occupation of excessive computing resources in an operation process.

After obtaining the normalized original feature X', the normalization unit may input the normalized original feature X' into the feature obtaining unit in the multi-head self-attention module. After receiving the normalized original feature X', the feature obtaining unit may divide the normalized original feature X' into M first features Z, where $Z \in R^{N \times d/M}$ (that is, each first feature Z may be considered as an N×(d/M) matrix). After obtaining the M first features Z, the feature obtaining unit may input each first feature Z into a corresponding self-attention module. For example, the feature obtaining unit may input a 1st first feature $Z_1$ into a first self-attention module, input a 2nd first feature $Z_2$ into a second self-attention module, ..., and input an Mth first feature $Z_M$ into an Mth self-attention module.

602. Perform linear transformation processing based on a kth first feature to obtain a kth second feature, a kth third feature, and a kth fourth feature, where k=1, ..., M.

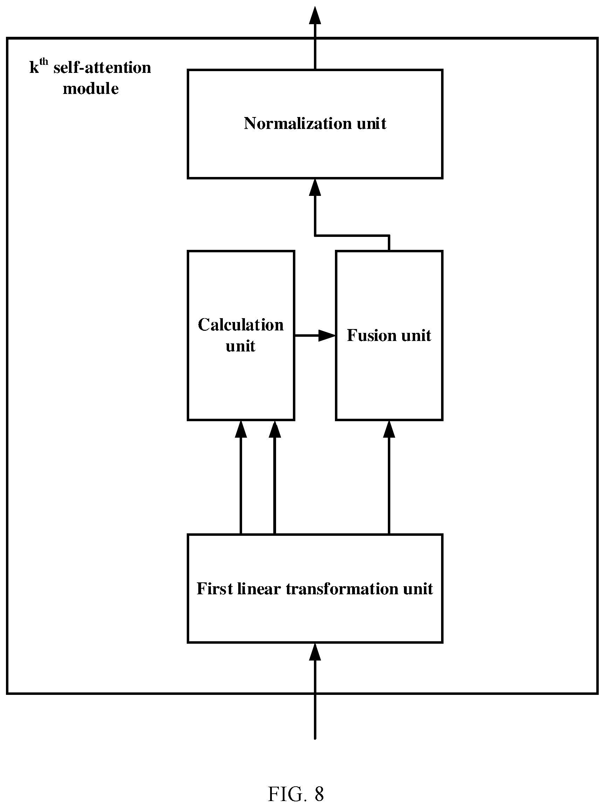

Among the M self-attention modules, internal structures of different self-attention modules are the same. For ease of description, the following describes a kth self-attention module among the M self-attention modules. As shown in FIG. 8 (FIG. 8 is a schematic diagram of a structure of the multi-head self-attention module according to this embodiment of this application), the kth self-attention module may include a first linear transformation unit, a calculation unit, a fusion unit, and a normalization unit. A first output end and a second output end of the linear transformation unit are connected to an input end of the calculation unit, a third output end of the linear transformation unit is connected to a first input end of the fusion unit, an output end of the calculation unit is connected to a second input end of the fusion unit, and an output end of the fusion unit is connected to an input end of the normalization unit.

After the first linear transformation unit of the kth self-attention module receives the kth first feature $Z_k$, the first linear transformation unit may perform linear transformation processing on the kth first feature $Z_k$ to obtain the kth second feature $Q_k$, the kth third feature $K_k$, and the kth fourth feature $V_k$. Specifically, a first weight matrix $W_Q$, a second weight matrix $W_K$, and a third weight matrix $W_V$ are set in the first linear transformation unit, where $W_Q$, $W_K$,

$$W_V \in R^{\left(\frac{d}{M}\right) \times \left(\frac{d}{M}\right)}$$ . In this case, the first linear transformation unit may perform, by using the first weight matrix $W_Q$, linear transformation processing formed by addition operations, on the $k^{th}$ first feature $Z_k$ to obtain the $k^{th}$ second feature $Q_k$, perform, by using the second weight matrix $W_K$, the linear transformation processing formed by addition operations, on the $k^{th}$ first feature $Z_k$ to obtain the $k^{th}$ third feature $K_k$, and perform, by using the third weight matrix $W_V$, the linear transformation processing formed by addition operations, on the $k^{th}$ first feature $Z_k$ to obtain the $k^{th}$ fourth feature $V_k$.

The first linear transformation unit may implement, by using the following formula, the linear transformation processing formed by addition operations:

$$Q_{k,a,b} = \sum_{u=1}^{d/M} -|Z_{k,a,u} - W_{Q,u,b}|$$

$$K_{k,a,b} = \sum_{u=1}^{d/M} -|Z_{k,a,u} - W_{K,u,b}|$$

$$V_{k,a,b} = \sum_{u=1}^{d/M} -|Z_{k,a,u} - W_{V,u,b}|$$

(2)

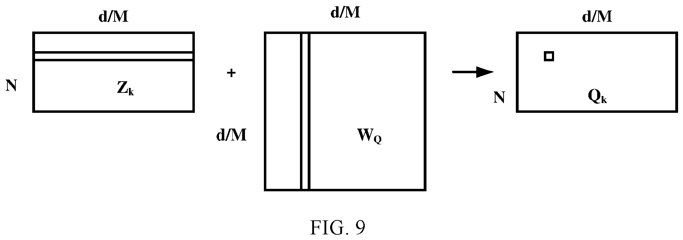

In the foregoing formula, for the $k^{th}$ second feature Qk, $Q_{k,a,b}$ is an element in an $a^{th}$ row and a $b^{th}$ column of the $k^{th}$ second feature $Q_k$, $Z_{k,a,u}$ is a $u^{th}$ element of an $a^{th}$ row vector of the $k^{th}$ first feature $Z_k$, and $W_{Q,u,b}$ is a $u^{th}$ element of a $b^{th}$ column vector of the first weight matrix $W_Q$, where a=1, ..., N, b=1, ..., d/M, and u=1, ..., d/M. It can be learned that, as shown in FIG. 9 (FIG. 9 is a schematic diagram of the linear transformation processing formed by addition operations according to this embodiment of this application), the first linear transformation unit performs subtraction processing on an $a^{th}$ row vector of the $k^{th}$ second feature Qk and the $b^{th}$ column vector of the first weight matrix $W_Q$, then performs absolute value processing on all elements of an intermediate vector obtained through the subtraction processing, then performs negative value processing on all absolute-value elements of the intermediate vector, then performs addition processing on all negative-value elements of the intermediate vector, and uses a result obtained through the addition processing as the element in the $a^{th}$ row and the $b^{th}$ column of the $k^{th}$ second feature $Q_k$. Because a=1, ..., N and b=1, ..., d/M, indicating that the foregoing process is performed for N×(d/M) times, the $k^{th}$ second feature $Q_k$ can be obtained, where $Q_k \in R^{N \times d/M}$ (that is, the $k^{th}$ second feature $Q_k$ may be considered as an N×(d/M) matrix).

For descriptions of the $k^{th}$ third feature $K_k$ and the $k^{th}$ fourth feature $V_k$, refer to related descriptions of the $k^{th}$ second feature $Q_k$. Details are not described herein again.

After obtaining the $k^{th}$ second feature $Q_k$, the $k^{th}$ third feature $K_k$, and the $k^{th}$ fourth feature $V_k$, the first linear transformation unit may send the $k^{th}$ second feature $Q_k$ and the $k^{th}$ third feature $K_k$ to the calculation unit, and send the $k^{th}$ fourth feature $V_k$ to the fusion unit.

It should be understood that, in this embodiment, the second feature may be considered as a Q (query) feature in a self-attention mechanism, and the third feature may be considered as a K (key) feature in the self-attention mechanism, and the fourth feature may be considered as a V (value) feature in the self-attention mechanism.

603. Calculate a distance between the $k^{th}$ second feature and the $k^{th}$ third feature to obtain a $k^{th}$ fifth feature.

After receiving the $k^{th}$ second feature $Q_k$ and the $k^{th}$ third feature $K_k$, the calculation unit of the $k^{th}$ self-attention module may calculate the distance between the $k^{th}$ second feature and the $k^{th}$ third feature to obtain the $k^{th}$ fifth feature $A_k'$ . Specifically, the distance between the $k^{th}$ second feature $Q_k$ and the $k^{th}$ third feature $K_k$ may be an L1 distance (L1 distance), or may be an L2 distance (L2 distance). For ease of description, the following uses the L1 distance for description. The calculation unit may calculate a distance between two features by using the following formula:

$$A'_{k,j,i} = \frac{\exp\{\frac{-A_{k,j,i}}{\sqrt{d_a}}\}}{Z_j}$$

$$A_{k,j,i} = \sum_{t=1}^{N} (Q_{k,j,t} - K_{k,i,t})$$

$$Z_j = \sum_{i=1}^{N} \exp\{\frac{-A_{k,j,i}}{\sqrt{d_a}}\}$$

$$d_a = 2d_e(1 - \frac{2}{\pi})$$

$$(3)$$

In the foregoing formula, $A'_{k,j,i}$ is an element in a $j^{th}$ row and an $i^{th}$ column of the $k^{th}$ fifth feature, $A_{k,j,i}$ is an element in a $j^{th}$ row and an $i^{th}$ column of a $k^{th}$ seventh feature, $Q_{k,j,t}$ is a $t^{th}$ element of a $j^{th}$ row vector of the $k^{th}$ second feature $Q_k$, $K_{k,i,t}$ is a $t^{th}$ element of an $i^{th}$ row vector of the $k^{th}$ second feature $K_k$, $d_a$ is a value used for scaling processing (that is, scale processing), $d_e$ is a preset value, and $\frac{\exp\{...\}}{Z}$ is normalization processing of a softmax function type (that is, softmax processing), where j=1, ..., N, i=1, ..., N, and t=1, ..., d/M. It can be learned that the calculation unit performs subtraction processing on the $j^{th}$ row vector of the $k^{th}$ second feature $Q_k$ and the $i^{th}$ row vector of the $k^{th}$ third feature $K_k$, performs addition processing on all elements of an intermediate vector obtained through the subtraction processing, and then uses a result of the addition processing as the element in the $j^{th}$ row and the $i^{th}$ column of the $k^{th}$ seventh feature $A_k$. Then the calculation unit performs scaling processing and normalization processing on the element in the $j^{th}$ row and the $i^{th}$ column of the $k^{th}$ seventh feature $A_k$ to obtain the element in the $j^{th}$ row and the $i^{th}$ column of the $k^{th}$ fifth feature $A'_k$. Because j=1, ..., N and i=1, ..., N, indicating that the foregoing process is performed for N×N times, the $k^{th}$ fifth feature $A'_k$ can be obtained, where $A'_k \in R^{N \times N}$ (that is, the $k^{th}$ fifth feature $A'_k$ may be considered as an N×N matrix).

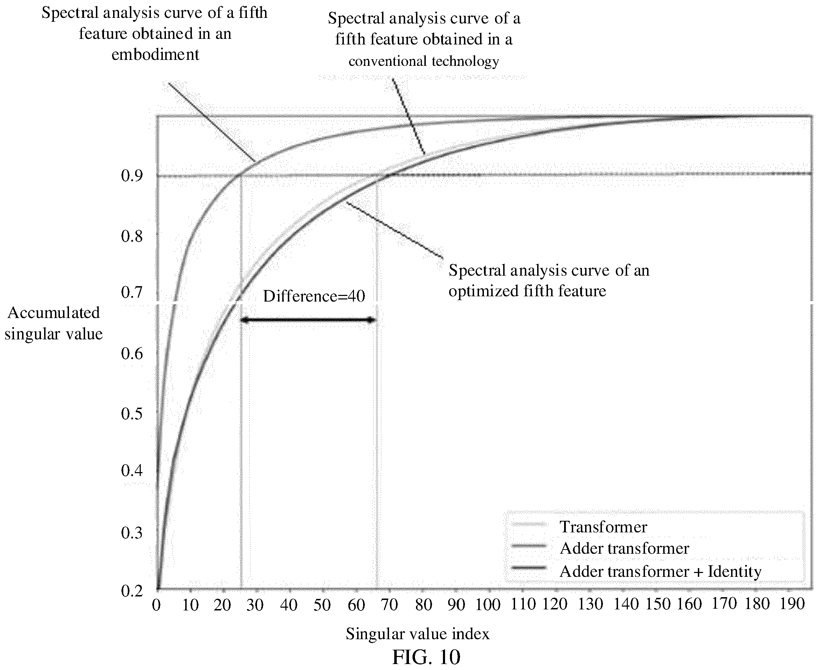

It should be noted that, in a conventional technology, a fifth feature is calculated by performing a large quantity of multiplication operations. It can be learned from the formula (3) that, in this embodiment, the fifth feature is calculated by performing a large quantity of addition operations. In an actual application, spectral decomposition is performed on the fifth feature obtained by using the conventional technology and the fifth feature obtained in this embodiment, then normalization processing is performed on an obtained singular value, and then accumulation processing is performed on the normalized singular value. Because distribution of the singular value represents distribution of main information in a matrix, a singular value index whose normalized singular value reaches 90% represents a distribution location of the main information in the matrix and may be considered as a rank of the matrix. In this case, observation data of the fifth feature obtained by using the conventional technology and observation data of the fifth feature obtained in this embodiment are shown in FIG. 10 (FIG. 10 is a schematic diagram of observation data according to this embodiment of this application). When the accumulated singular value reaches 90%, a singular value index of the fifth feature obtained by using the conventional technology is about 65, and a singular value index of the fifth feature obtained in this embodiment is about 25. In other words, a rank of the fifth feature obtained in the conventional technology is about 60 higher than a rank of the fifth feature obtained in this embodiment, and performance of a transformer model is affected.

To resolve this problem, the calculation unit may optimize the $k^{th}$ fifth feature $A'_k$, that is, add a unit matrix to the

$k^{th}$ fifth feature $A_k'$ to obtain a $k^{th}$ optimized fifth feature $A_k''$. As can be learned from FIG. 10, after the fifth feature is optimized, when the accumulated singular value reaches 90%, a singular value index of the optimized fifth feature is about 70. Therefore, a low-rank problem of the feature is resolved, and the performance of the transformer model can be improved.

The calculation unit obtains the $k^{th}$ optimized fifth feature $A_k''$, and may send the $k^{th}$ optimized fifth feature $A_k''$ to the fusion unit.

It should be understood that a value of $d_e$ may be set based on an actual requirement. Generally, the value of $d_e$ is set according to a specific standard. For example, $d_e$ may keep a variance magnitude of the second feature, a variance magnitude of the third feature, and a variance magnitude of the fifth feature consistent.

It should be further understood that, in this embodiment, the fifth feature may be considered as an attention (attention) feature in the self-attention mechanism, that is, an A-feature.

604. Perform first fusion processing based on the $k^{th}$ fifth feature and the $k^{th}$ fourth feature to obtain a $k^{th}$ sixth feature.

After the fusion unit of the $k^{th}$ self-attention module receives the $k^{th}$ optimized fifth feature $A_k''$ and the $k^{th}$ fourth feature $V_k$, the fusion unit may perform first fusion processing on the $k^{th}$ optimized fifth feature $A_k''$ and the $k^{th}$ fourth feature $V_k$ to obtain the $k^{th}$ sixth feature $O_k$. Specifically, the fusion unit may implement the first fusion processing by using the following formula:

$$O_{k,y,x} = \sum_{v=1}^{N} sgn \ (V_{k,v,x}) \ \cdot \ (|V_{k,v,x}| + A_{k,y,v}'')$$

$$(4)$$

In the foregoing formula, $O_{k,y,x}$ is an element in a $y^{th}$ row and an $x^{th}$ column of the $k^{th}$ sixth feature, $V_{k,v,x}$ is a $v^{th}$ element of an $x^{th}$ column vector of the $k^{th}$ fourth feature $V_k$, $A_{k,y,v}''$ is a $v^{th}$ element of a $y^{th}$ row vector of the $k^{th}$ fifth feature $A_k''$, and $sgn(V_{k,v,x})$ is a sign (that is, a positive or negative sign) of the $v^{th}$ element of the $x^{th}$ column vector of the $k^{th}$ fourth feature $V_k$, where x=1, ..., d/M, and y=1, ..., N. It can be learned that the fusion unit performs absolute value processing on the $x^{th}$ column vector of the $k^{th}$ fourth feature $V_k$ to obtain an absolute-value $x^{th}$ column vector of the $k^{th}$ fourth feature $V_k$. Then the fusion unit performs addition processing on the absolute-value $x^{th}$ column vector of the $k^{th}$ fourth feature $V_k$ and the $y^{th}$ row vector of the $k^{th}$ fifth feature $A_{k,y,v}''$, then sets a sign of each element in an intermediate vector obtained through the addition processing to be the same as a sign of a corresponding element of the $x^{th}$ column vector of the $k^{th}$ fourth feature $V_k$, then performs addition processing on all elements of the sign-set intermediate vector, and uses a result of the addition processing as the element in the $y^{th}$ row and the $x^{th}$ column of the $k^{th}$ sixth feature $O_k$. Because x=1, ..., d/M and y=1, ...N, indicating that the foregoing process is performed for N×(d/M) times, the $k^{th}$ sixth feature $O_k$ can be obtained, where $O_k \in R^{N \times d/M}$ (that is, the $k^{th}$ sixth feature $O_k$ may be considered as an N×(d/M) matrix).

The fusion unit obtains the $k^{th}$ sixth feature $O_k$, and may send the $k^{th}$ sixth feature $O_k$ to the normalization unit, so that the normalization unit performs normalization processing on the $k^{th}$ sixth feature $O_k$ to obtain a normalized $k^{th}$ sixth feature $O_k'$ and sends the normalized $k^{th}$ sixth feature $O_k'$ to the splicing unit.

It should be noted that the remaining attention modules also perform steps implemented by the $k^{th}$ attention module. Therefore, each of the M attention modules can obtain a normalized sixth feature O', and send the normalized sixth feature O' to the splicing unit.

It should be understood that, in this embodiment, three weight matrices are set in first linear transformation units of different attention modules. However, the weight matrices in the different attention modules may be completely the same, or may be completely different, or may be partially the same. This is not limited herein.

605. Obtain a classification result of the target image based on M sixth features.

After obtaining M normalized sixth features O' , the splicing unit may perform splicing processing on the M normalized sixth features O' to obtain an eighth feature $O_H$ of the target image. Specifically, the splicing unit may implement splicing processing by using the following formula:

$$O_H = \text{concat}(O'_1, \ O'_2, \ \ldots, \ O'_M) \tag{5}$$

In the foregoing formula, $O'_1$ is a first normalized sixth feature, $O'_2$ is a second normalized sixth feature, and $O'_M$ is an $M^{th}$ normalized sixth feature. Because each normalized sixth feature O' is an N×(d/M) matrix, the eighth feature $O_H$ obtained by splicing the M normalized sixth features O' is an N×d matrix.

After obtaining the eighth feature $O_H$, the splicing unit sends the eighth feature $O_H$ to the second linear transformation unit, where a fourth weight matrix $W_H$ is set in the second linear transformation unit, and $W_H \in R^{d \times d}$. In this case, the second linear unit may perform, by using the fourth weight matrix $W_H$, the linear transformation processing formed by addition operations, on the eighth feature $O_H$ to obtain a linearly transformed eighth feature $O'_H$ . Specifically, the second linear transformation unit may implement, by using the following formula, the linear transformation processing formed by addition operations:

$$O'_{H,f,g} = \sum_{e=1}^{d} -|O_{H,f,e} - W_{H,e,g}| \tag{6}$$

In the foregoing formula, $O'_{H,f,g}$ is an element in an $f^{th}$ row and a $g^{th}$ column of the linearly transformed eighth feature, $O_{H,f,e}$ is an $e^{th}$ element of an $f^{th}$ row vector of the eighth feature $O_H$, and $W_{H,e,g}$ is an $e^{th}$ element of a $g^{th}$ column vector of the fourth weight matrix, where f=1, ..., N, g=1, ..., d, and e=1, ..., d. It can be learned that the second linear transformation unit performs subtraction processing on the $f^{th}$ row vector of the eighth feature $O_H$ and the $g^{th}$ column vector of the fourth weight matrix $W_H$, then performs absolute value processing on all elements of an intermediate vector obtained through the subtraction processing, then performs negative value processing on all absolute-value elements of the intermediate vector, then performs addition processing on all negative-value elements of the intermediate vector, and uses a result obtained through the addition processing as the element in the $f^{th}$ row and the $g^{th}$ column of the linearly transformed eighth feature $O'_H$ . Because f=1, ..., N and g=1, ..., d, indicating that the foregoing process is performed for N×d times, the linearly transformed eighth feature $O'_H$ can be obtained (that is, the linearly transformed eighth feature $O'_H$ may be considered as an N×d matrix).

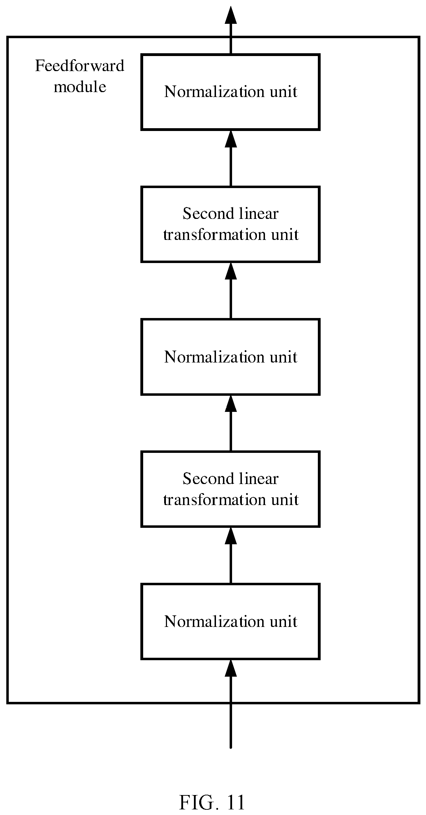

After obtaining the linearly transformed eighth feature $O'_H$ , the second linear transformation unit may input the linearly transformed eighth feature $O'_H$ into the first fusion module. After receiving the linearly transformed eighth feature $O'_H$ and the original feature X of the target image, the first fusion module may perform second fusion processing on the linearly transformed eighth feature $O'_H$ and the original feature X of the target image, and send a fusion result (usually an N×d matrix) to the feedforward module and the second fusion module. As shown in FIG. 11 (FIG. 11 is a schematic diagram of the feedforward module according to this embodiment of this application), the feedforward module includes three normalization units and two second linear transformation units. The normalization units and the second linear transformation units are alternately connected. In this case, the feedforward module may perform normalization for three times and linear transformation formed by addition operations for two times on the fusion result to obtain a feedforward processing result (usually an N×d matrix), and send the result to the second fusion module. After receiving the fusion result from the first fusion module and the feedforward processing result from the feedforward module, the second fusion module may perform second fusion processing on the two results to obtain a ninth feature $O''_H$ of the target image, where

$$O_H'' \in R^{N \times d}.$$

It should be noted that the foregoing second fusion processing may include at least one of addition processing, multiplication processing, subtraction processing, concatenation processing, or concatenation convolution processing.

The ninth feature $O_H''$ of the target image is obtained, and the classification result of the target image may be obtained based on the ninth feature $O_H''$. Specifically, when the transformer network includes only a one-layer self-attention network, the self-attention network directly inputs the ninth feature $O_H''$ obtained by the self-attention network to the classification network, so that the classification network processes the ninth feature $O_H''$ to obtain the classification result of the target image. When the transformer network includes a multi-layer self-attention network (as shown in FIG. 7, the transformer network includes an L-layer self-attention network, where L is greater than or equal to 2), after obtaining the ninth feature $O_H''$, a first layer of the self-attention network inputs the ninth feature $O_H''$ into the second layer of the self-attention network, and the second layer of the self-attention network also performs steps (that is, step 601 to step 605) implemented by the first layer of the self-attention network on the ninth feature $O_H''$, until a last layer of the self-attention network performs steps implemented by the first layer of the self-attention network. The last layer of the self-attention network may send a result obtained by the last layer of the self-attention network to the classification network for processing, to obtain the classification result of the target image (that is, the category of the target image).

It should be understood that this embodiment is described only by using an example in which the feedforward module includes three normalization units and two second linear transformation units, but a quantity of normalization units and a quantity of second linear transformation units in the feedforward module are not limited thereto.

It should be further understood that, in this embodiment, except that normalization processing implemented by the calculation unit is softmax processing, other normalization processing implemented by the normalization units is usually layer normalization (layer normalization) processing.

It should be further understood that, in this embodiment, operations implemented by the second linear transformation unit in the multi-head attention module and the second linear transformation unit in the feedforward module are the same, but weight matrices of the two second linear transformation units may be the same or may be different. This is not limited herein. Further, if the feedforward module includes a plurality of second linear transformation units, weight matrices of the plurality of second linear transformation units may be the same or may be different. This is not limited herein.

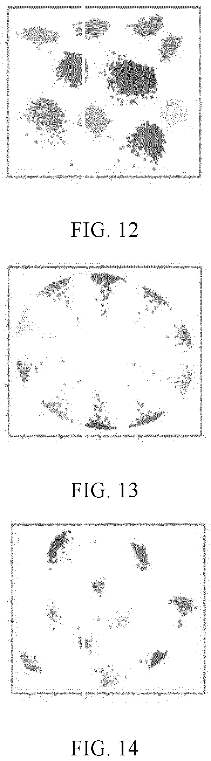

In addition, the transformer network provided in this embodiment of this application may be compared with a neural network model in the conventional technology. Specifically, feature visualization results of a neural network model in a conventional technology 1, a neural network model in a conventional technology 2, and the transformer network provided in this embodiment of this application are respectively shown in FIG. 12 to FIG. 14 (FIG. 12 is a schematic diagram of a feature visualization result of the neural network model in the conventional technology 1, FIG. 13 is a schematic diagram of a feature visualization result of the neural network model in the conventional technology 2, and FIG. 14 is a schematic diagram of a feature visualization result of the transformer network according to this embodiment of this application). It can be learned that classes of the neural network model in the conventional technology 1 are distributed on different cluster centers, and features of the neural network model in the conventional technology 2 are distributed on one ellipse, and features of the transformer network provided in this embodiment of this application have not only characteristics of cluster distribution of the neural network model in the conventional technology 1, but also characteristics of elliptic distribution of the neural network model in the conventional technology 2.

Further, three transformer networks provided in this embodiment of this application may be further compared with three neural network models in the conventional technology. Quantities of layers of self-attention networks of a transformer network 1, a transformer network 2, and a transformer network 3 provided in this embodiment of this application are different (that is, the three transformer networks are mainly constructed based on an addition network), and the three neural network models (referred to as a neural network model 1, a neural network model 2, and a neural network model 3) provided in the conventional technology are mainly constructed based on a multiplication network and have different internal structures. A data set 1 and a data set 2 are input into six models. Experiment results presented by the models are shown in Table 1.

**Table 1**

| Model | Number of multiplication operations (unit: 1 billion) | Number of addition operations | Energy consumption (unit: pJ) | Accuracy of data set 1 | Accuracy of data set 2 |
|---|---|---|---|---|---|
| Neural network model 1 | 17.56B | 17.56B | 80.7B | 94.83% | 74.75% |
| Transformer network 1 | 0.12B | 35.00B | 31.9B | 94.47% | 74.49% |
| Neural network model 2 | 4.6B | 4.6B | 21.2B | 93.22% | 73.06% |
| Transformer network 2 | 0.06B | 9.14B | 8.4B | 92.91% | 72.74% |
| Neural network model 3 | 1.25B | 1.25B | 6.0B | 92.61% | 72.58% |
| Transformer network 4 | 0.03B | 2.47B | 2.3B | 92.38% | 72.23% |

As can be learned from Table 1, power consumption of the transformer network provided in this embodiment of this application is only about 1/3 of power consumption of the neural network model provided in the conventional technology, and their performance is equivalent.

In the embodiments of this application, after obtaining the M first features of the target image, the transformer network may perform linear transformation processing based on the $k^{th}$ first feature to obtain the $k^{th}$ second feature (that is, the Q-feature), the $k^{th}$ third feature (that is, the K-feature), and the $k^{th}$ fourth feature (that is, the V-feature), where k=1, ..., M. Then the transformer network calculates the distance between the $k^{th}$ second feature and the $k^{th}$ third feature to obtain the $k^{th}$ fifth feature (that is, the attention feature). Then the transformer network performs first fusion processing based on the $k^{th}$ fifth feature and the $k^{th}$ fourth feature to obtain the $k^{th}$ sixth feature. After obtaining the M sixth features, the transformer network may obtain the classification result of the target image based on the M sixth features. In the process, because calculation of the distance between the second feature and the third feature can be implemented by a large quantity of addition operations, the operation of obtaining the fifth feature (that is, the attention feature) by the transformer network no longer includes a large quantity of multiplication operations, but is replaced by addition operations with relatively low computational overheads. Therefore, the transformer network can be extensively applied to terminal devices with limited computing power.

Further, after obtaining the attention feature, the transformer network may optimize the attention feature (that is, superimpose a unit matrix), so that main information in the attention feature is distributed more evenly, thereby helping improve performance of the transformer network.

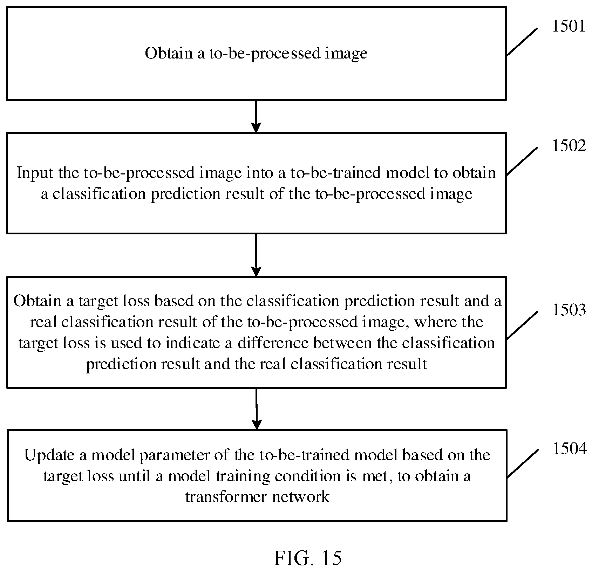

The foregoing describes in detail the image classification methods provided in the embodiments of this application. The following describes model training provided in the embodiments of this application. FIG. 15 is a schematic flowchart of a model training method according to an embodiment of this application. As shown in FIG. 15, the method includes the following steps.

1501. Obtain a to-be-processed image.

When a to-be-trained model needs to be trained, a batch of training samples, that is, to-be-processed images used for training, may be obtained. A real classification result of the to-be-processed image (that is, a real category of the to-be-processed image) is known.

1502. Input the to-be-processed image into a to-be-trained model to obtain a predictive classification result of the to-be-processed image.

After the to-be-processed image is obtained, the to-be-processed image may be input into the to-be-trained model, so that the to-be-trained model implements the following steps: obtaining M first features of the to-be-processed image, where M≥1; performing linear transformation processing based on a $k^{th}$ first feature to obtain a $k^{th}$ second feature, a $k^{th}$ third feature, and a $k^{th}$ fourth feature, where k=1, ..., M; calculating a distance between the $k^{th}$ second feature and the $k^{th}$ third feature to obtain a $k^{th}$ fifth feature; performing first fusion processing based on the $k^{th}$ fifth feature and the $k^{th}$ fourth feature to obtain a $k^{th}$ sixth feature; and obtaining the predictive classification result of the to-be-processed image (that is, a predicted category of the to-be-processed image) based on M sixth features Further, sizes of the M first features are the same.

In a possible implementation, the to-be-trained model is configured to: obtain a first weight matrix, a second weight matrix, and a third weight matrix; perform, by using the first weight matrix, linear transformation processing formed by addition operations, on the $k^{th}$ first feature to obtain the $k^{th}$ second feature; perform, by using the second weight matrix, the linear transformation processing formed by addition operations, on the $k^{th}$ first feature to obtain the $k^{th}$ third feature; and perform, by using the third weight matrix, the linear transformation processing formed by addition operations, on the $k^{th}$ first feature to obtain the $k^{th}$ fourth feature.

In a possible implementation, the to-be-trained model is configured to calculate the distance between the $k^{th}$ second feature and the $k^{th}$ third feature based on an addition operation to obtain the $k^{th}$ fifth feature.

In a possible implementation, the $k^{th}$ second feature includes N row vectors, the $k^{th}$ third feature includes N row vectors, and the to-be-trained model is configured to: perform subtraction processing on a $j^{th}$ row vector of the $k^{th}$ second feature and an $i^{th}$ row vector of the $k^{th}$ third feature to obtain a $p^{th}$ first intermediate vector, where j=1, ..., N, i=1, ..., N, and P=1, ..., N×N; perform addition processing on all elements of the $p^{th}$ first intermediate vector to obtain an element in a $j^{th}$ row and an $i^{th}$ column of a $k^{th}$ seventh feature; and perform scaling processing and normalization processing on the $k^{th}$ seventh feature to obtain the $k^{th}$ fifth feature.

In a possible implementation, the to-be-trained model is configured to process an element of the $k^{th}$ fifth feature and an element of the $k^{th}$ fourth feature based on an addition operation to obtain the $k^{th}$ sixth feature.

In a possible implementation, the $k^{th}$ fourth feature includes N×d/M elements, and the to-be-trained model is configured to: perform absolute value processing on an $x^{th}$ column vector of the $k^{th}$ fourth feature to obtain an absolute-value $x^{th}$ column vector of the $k^{th}$ fourth feature; perform addition processing on the absolute-value $x^{th}$ column vector and a $y^{th}$ row vector of the $k^{th}$ fifth feature to obtain a $q^{th}$ second intermediate vector, where x=1, ..., d/M, y=1, ..., N, and h=1, ..., N×d/M; set a sign of the $q^{th}$ second intermediate vector to be the same as a sign of the $x^{th}$ column vector, to obtain a sign-set $q^{th}$ second intermediate vector; and perform addition processing on all elements of the sign-set $q^{th}$ second intermediate vector to obtain an element in a $y^{th}$ row and an $x^{th}$ column of the $k^{th}$ sixth feature.

In a possible implementation, the to-be-trained model is configured to: perform splicing processing on the M sixth features to obtain an eighth feature of the to-be-processed image; perform second fusion processing, the linear transformation processing formed by addition operations, and normalization processing based on the M first features and the eighth feature, to obtain a ninth feature of the to-be-processed image; and obtain the classification result of the to-be-processed image based on the ninth feature. Further, the second fusion processing includes at least one of addition processing, multiplication processing, subtraction processing, concatenation processing, or concatenation convolution processing.

In a possible implementation, the to-be-trained model is further configured to perform addition processing on the $k^{th}$ fifth feature and a preset unit matrix to obtain a $k^{th}$ optimized fifth feature.

For the process of obtaining the first feature, the second feature, the third feature, the fourth feature, the fifth feature, and the sixth feature by the to-be-trained model, refer to related descriptions in step 601 to step 604 in the embodiment shown in FIG. 6. Details are not described herein again. For the process of obtaining the classification result of the to-be-processed image by the to-be-trained model based on the sixth feature, refer to related descriptions in step 605 in the embodiment shown in FIG. 6. Details are not described herein again.

1503. Obtain a target loss based on the predictive classification result and the real classification result of the to-be-processed image, where the target loss is used to indicate a difference between the predictive classification result and the real classification result.

After the predictive classification result of the to-be-processed image is obtained, the predictive classification result of the to-be-processed image and the real classification result of the to-be-processed image may be calculated by using a preset target loss function, so that the target loss is obtained, where the target loss is used to indicate the difference between the predictive classification result and the real classification result.

1504. Update a model parameter of the to-be-trained model based on the target loss until a model training condition is met, to obtain a transformer network.

After the target loss is obtained, the model parameter of the to-be-trained model may be updated based on the target loss, and the to-be-trained model with the updated parameter is trained by using a next batch of training samples (that is, step 1502 to step 1504 are performed again), until the model training condition is met (for example, convergence of the target loss is achieved). In this way, the transformer network can be obtained.

The transformer network obtained through training in this embodiment of this application has a capability of classifying a to-be-classified target image. In an image classification process, the transformer network may calculate a distance between a Q-feature and a K-feature to obtain an attention feature of the target image. Because calculation of the distance between the Q-feature and the K-feature can be implemented by a large quantity of addition operations, the operation of obtaining the attention feature by the transformer network no longer includes a large quantity of multiplication operations, but is replaced by addition operations with relatively low computational overheads. Therefore, the transformer network can be extensively applied to terminal devices with limited computing power.

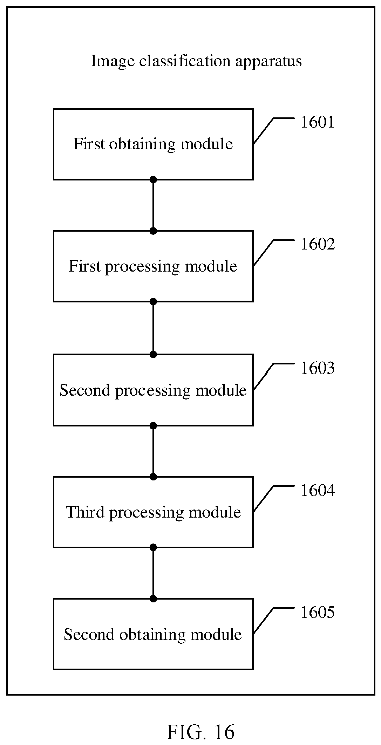

The foregoing describes in detail the methods provided in the embodiments of this application. The following separately describes an image classification apparatus and a model training apparatus provided in the embodiments of this application. FIG. 16 is a schematic diagram of a structure of an image classification apparatus according to an embodiment of this application. As shown in FIG. 16, the apparatus includes:

a first obtaining module 1601, configured to obtain M first features of a target image, where M≥1;
a first processing module 1602, configured to perform linear transformation processing based on a $k^{th}$ first feature to obtain a $k^{th}$ second feature, a $k^{th}$ third feature, and a $k^{th}$ fourth feature, where k=1, ..., M;

a second processing module 1603, configured to calculate a distance between the $k^{th}$ second feature and the $k^{th}$ third feature to obtain a $k^{th}$ fifth feature;

a third processing module 1604, configured to perform first fusion processing based on the $k^{th}$ fifth feature and the $k^{th}$ fourth feature to obtain a $k^{th}$ sixth feature; and

a second obtaining module 1605, configured to obtain a classification result of the target image based on M sixth features.

In a possible implementation, the second processing module 1603 is configured to calculate the distance between the $k^{th}$ second feature and the $k^{th}$ third feature based on an addition operation to obtain the $k^{th}$ fifth feature.

In a possible implementation, the $k^{th}$ second feature includes N row vectors, the $k^{th}$ third feature includes N row vectors, and the second processing module 1603 is configured to: perform subtraction processing on a $j^{th}$ row vector of the $k^{th}$ second feature and an $i^{th}$ row vector of the $k^{th}$ third feature to obtain a $p^{th}$ first intermediate vector, where j=1, ..., N, i=1, ..., N, and P=1, ..., N×N; perform addition processing on all elements of the $p^{th}$ first intermediate vector to obtain an element in a $j^{th}$ row and an $i^{th}$ column of a $k^{th}$ seventh feature; and perform scaling processing and normalization processing on the $k^{th}$ seventh feature to obtain the $k^{th}$ fifth feature.

In a possible implementation, the third processing module 1604 is configured to process an element of the $k^{th}$ fifth feature and an element of the $k^{th}$ fourth feature based on an addition operation to obtain the $k^{th}$ sixth feature.

In a possible implementation, the $k^{th}$ fourth feature includes N×d/M elements, and the third processing module 1604 is configured to: perform absolute value processing on an $x^{th}$ column vector of the $k^{th}$ fourth feature to obtain an absolute-value $x^{th}$ column vector of the $k^{th}$ fourth feature; perform addition processing on the absolute-value $x^{th}$ column vector and a $y^{th}$ row vector of the $k^{th}$ fifth feature to obtain a $q^{th}$ second intermediate vector, where x=1, ..., d/M, y=1, ..., N, and h=1, ..., N×d/M; set a sign of the $q^{th}$ second intermediate vector to be the same as a sign of the $x^{th}$ column vector, to obtain a sign-set $q^{th}$ second intermediate vector; and perform addition processing on all elements of the sign-set $q^{th}$ second intermediate vector to obtain an element in a $y^{th}$ row and an $x^{th}$ column of the $k^{th}$ sixth feature.

In a possible implementation, the first processing module 1602 is configured to: obtain a first weight matrix, a second weight matrix, and a third weight matrix; perform, by using the first weight matrix, the linear transformation processing formed by addition operations, on the $k^{th}$ first feature to obtain the $k^{th}$ second feature; perform, by using the second weight matrix, the linear transformation processing formed by addition operations, on the $k^{th}$ first feature to obtain the $k^{th}$ third feature; and perform, by using the third weight matrix, the linear transformation processing formed by addition operations, on the $k^{th}$ first feature to obtain the $k^{th}$ fourth feature.

In a possible implementation, the second obtaining module 1605 is configured to: perform splicing processing on the M sixth features to obtain an eighth feature of the target image; perform second fusion processing, the linear transformation processing formed by addition operations, and normalization processing based on the M first features and the eighth feature, to obtain a ninth feature of the target image; and obtain the classification result of the target image based on the ninth feature.

In a possible implementation, the second processing module 1603 is further configured to perform addition processing on the $k^{th}$ fifth feature and a preset unit matrix to obtain a $k^{th}$ optimized fifth feature.

In a possible implementation, the second fusion processing includes at least one of addition processing, multiplication processing, subtraction processing, concatenation processing, or concatenation convolution processing.

In a possible implementation, sizes of the M first features are the same.

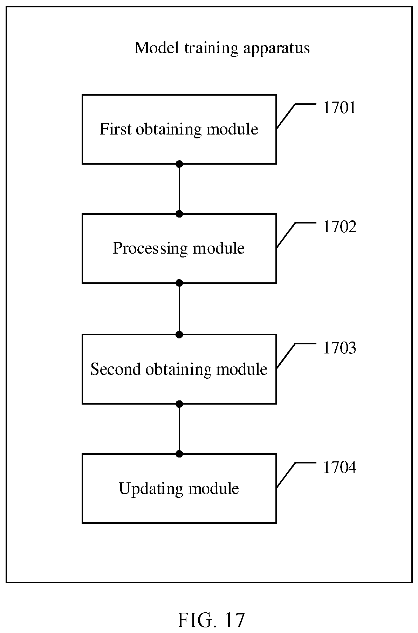

FIG. 17 is a schematic diagram of a structure of a model training apparatus according to an embodiment of this application. As shown in FIG. 17, the apparatus includes:

a first obtaining module 1701, configured to obtain a to-be-processed image;

a processing module 1702, configured to input the to-be-processed image into a to-be-trained model to obtain a predictive classification result of the to-be-processed image, where the to-be-trained model is configured to: obtain M first features of the to-be-processed image, where M≥1; perform linear transformation processing based on a $k^{th}$ first feature to obtain a $k^{th}$ second feature, a $k^{th}$ third feature, and a $k^{th}$ fourth feature, where k=1, ..., M; calculate a distance between the $k^{th}$ second feature and the $k^{th}$ third feature to obtain a $k^{th}$ fifth feature; perform first fusion processing based on the $k^{th}$ fifth feature and the $k^{th}$ fourth feature to obtain a $k^{th}$ sixth feature; and obtain the predictive classification result of the to-be-processed image based on M sixth features;

a second obtaining module 1703, configured to obtain a target loss based on the predictive classification result and a real classification result of the to-be-processed image, where the target loss is used to indicate a difference between the predictive classification result and the real classification result; and

an updating module 1704, configured to update a model parameter of the to-be-trained model based on the target loss until a model training condition is met, to obtain a transformer network. It should be noted that the second obtaining module and the updating module form a training module.

In a possible implementation, the to-be-trained model is configured to calculate the distance between the $k^{th}$ second feature and the $k^{th}$ third feature based on an addition operation to obtain the $k^{th}$ fifth feature.

In a possible implementation, the $k^{th}$ second feature includes N row vectors, the $k^{th}$ third feature includes N row vectors, and the to-be-trained model is configured to: perform subtraction processing on a $j^{th}$ row vector of the $k^{th}$ second feature and an $i^{th}$ row vector of the $k^{th}$ third feature to obtain a $p^{th}$ first intermediate vector, where j=1, ..., N, i=1, ..., N, and P=1, ..., N×N; perform addition processing on all elements of the $p^{th}$ first intermediate vector to obtain an element in a $j^{th}$ row and an $i^{th}$ column of a $k^{th}$ seventh feature; and perform scaling processing and normalization processing on the $k^{th}$ seventh feature to obtain the $k^{th}$ fifth feature.

In a possible implementation, the to-be-trained model is configured to process an element of the $k^{th}$ fifth feature and an element of the $k^{th}$ fourth feature based on an addition operation to obtain the $k^{th}$ sixth feature.

In a possible implementation, the $k^{th}$ fourth feature includes N×d/M elements, and the to-be-trained model is configured to: perform absolute value processing on an $x^{th}$ column vector of the $k^{th}$ fourth feature to obtain an absolute-value $x^{th}$ column vector of the $k^{th}$ fourth feature; perform addition processing on the absolute-value $x^{th}$ column vector and a $y^{th}$ row vector of the $k^{th}$ fifth feature to obtain a $q^{th}$ second intermediate vector, where x=1, ..., d/M, y=1, ..., N, and h=1, ..., N×d/M; set a sign of the $q^{th}$ second intermediate vector to be the same as a sign of the $x^{th}$ column vector, to obtain a sign-set $q^{th}$ second intermediate vector; and perform addition processing on all elements of the sign-set $q^{th}$ second intermediate vector to obtain an element in a $y^{th}$ row and an $x^{th}$ column of the $k^{th}$ sixth feature.

In a possible implementation, the to-be-trained model is configured to: obtain a first weight matrix, a second weight matrix, and a third weight matrix; perform, by using the first weight matrix, the linear transformation processing formed by addition operations, on the $k^{th}$ first feature to obtain the $k^{th}$ second feature; perform, by using the second weight matrix, the linear transformation processing formed by addition operations, on the $k^{th}$ first feature to obtain the $k^{th}$ third feature; and perform, by using the third weight matrix, the linear transformation processing formed by addition operations, on the $k^{th}$ first feature to obtain the $k^{th}$ fourth feature.

In a possible implementation, the to-be-trained model is configured to: perform splicing processing on the M sixth features to obtain an eighth feature of the to-be-processed image; perform second fusion processing, the linear transformation processing formed by addition operations, and normalization processing based on the M first features and the eighth feature, to obtain a ninth feature of the to-be-processed image; and obtain the classification result of the to-be-processed image based on the ninth feature.

In a possible implementation, the to-be-trained model is further configured to perform addition processing on the $k^{th}$ fifth feature and a preset unit matrix to obtain a $k^{th}$ optimized fifth feature.

In a possible implementation, the second fusion processing includes at least one of addition processing, multiplication processing, subtraction processing, concatenation processing, or concatenation convolution processing.

In a possible implementation, sizes of the M first features are the same.

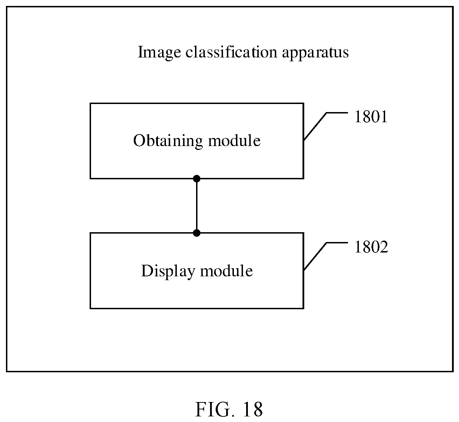

FIG. 18 is a schematic diagram of another structure of an image classification apparatus according to an embodiment of this application. As shown in FIG. 18, the apparatus is deployed on a terminal device, the terminal device includes a transformer network, the transformer network includes a self-attention module, and the apparatus includes:

> an obtaining module 1801, configured to obtain a target image; and
> a display module 1802, configured to display a classification result of the target image, where the classification result of the target image is determined based on a distance between a second feature and a third feature that are obtained by inputting the target image into the self-attention module, the second feature is a Q-feature, and the third feature is a K-feature.

In a possible implementation, the distance is an L1 distance or an L2 distance.

It should be noted that, content such as information exchange between the modules/units of the apparatus and the execution processes thereof is based on the same idea as the method embodiments of this application, and produces the same technical effects as the method embodiments of this application. For specific content, refer to the foregoing descriptions in the method embodiments of this application. Details are not described herein again.

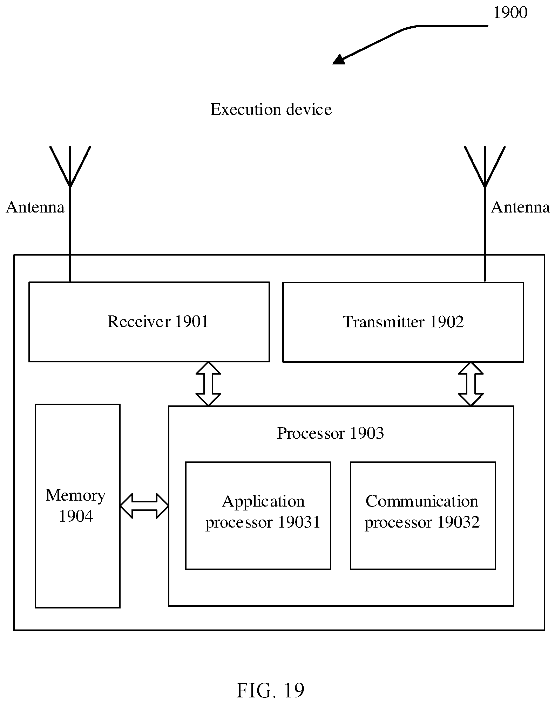

An embodiment of this application further relates to an execution device. FIG. 19 is a schematic diagram of a structure of an execution device according to an embodiment of this application. As shown in FIG. 19, the execution device 1900 may be specifically represented as a mobile phone, a tablet, a notebook computer, a smart wearable device, a server, or the like. This is not limited herein. The image classification apparatus described in the embodiment corresponding to FIG. 16 or FIG. 18 may be deployed on the execution device 1900, and is configured to implement an image classification function in the embodiment corresponding to FIG. 4, FIG. 5, or FIG. 6. Specifically, the execution device 1900 includes a receiver 1901, a transmitter 1902, a processor 1903, and a memory 1904 (the execution device 1900 may include one or more processors 1903, and one processor is used as an example in FIG. 19). The processor 1903 may include an application processor 19031 and a communication processor 19032. In some embodiments of this application, the receiver 1901, the transmitter 1902, the processor 1903, and the memory 1904 may be connected by using a bus or in another manner.

The memory 1904 may include a read-only memory and a random access memory, and provide instructions and data for the processor 1903. A part of the memory 1904 may further include a non-volatile random access memory (non-volatile random access memory, NVRAM). The memory 1904 stores a processor and operation instructions, an executable module or a data structure, or a subset thereof or an extended set thereof. The operation instructions may include various operation instructions for implementing various operations.

The processor 1903 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1903, or may be implemented by the processor 1903. The processor 1903 may be an integrated circuit chip with a signal processing capability. In an implementation process, the steps in the foregoing methods may be implemented by using a hardware integrated logical circuit in the processor 1903, or by using instructions in a form of software. The processor 1903 may be a general-purpose processor, a digital signal processor (digital signal processing, DSP), a microprocessor, or a microcontroller, and may further include an application-specific integrated circuit (application specific integrated circuit, ASIC), a field programmable gate array (field-programmable gate array, FPGA) or another programmable logic device, a discrete gate or transistor logic device, or a discrete hardware component. The processor 1903 may implement or perform the methods, steps, and logical block diagrams that are disclosed in the embodiments of this application. The general-purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1904. The processor 1903 reads information in the memory 1904 and completes the steps in the foregoing methods in combination with hardware in the processor 1903.

The receiver 1901 may be configured to receive input digit or character information, and generate a signal input related to a related setting and function control of the execution device. The transmitter 1902 may be configured to output digit or character information through a first interface. The transmitter 1902 may be further configured to send an instruction to a disk group through the first interface, to modify data in the disk group. The transmitter 1902 may further include a display device such as a display screen.

In this embodiment of this application, in a case, the processor 1903 is configured to perform image classification on an image by using the transformer network in the embodiment corresponding to FIG. 4, FIG. 5, or FIG. 6.

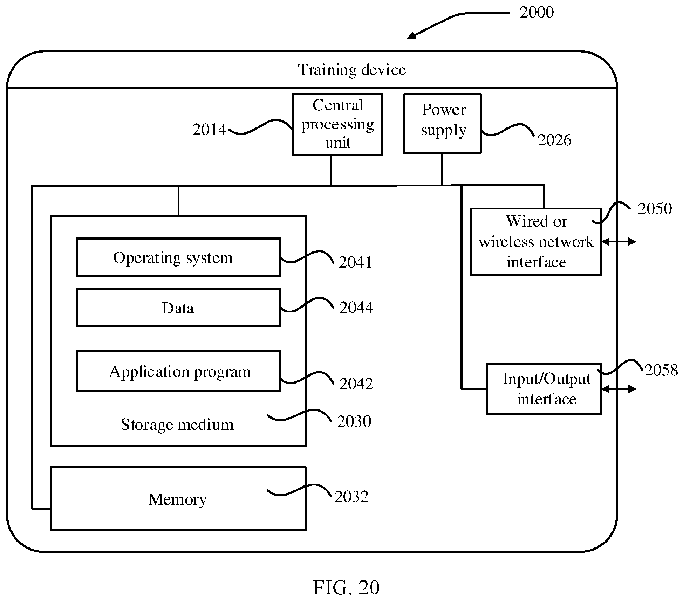

An embodiment of this application further relates to a training device. FIG. 20 is a schematic diagram of a structure of a training device according to an embodiment of this application. As shown in FIG. 20, the training device 2000 is implemented by one or more servers. The training device 2000 may vary greatly due to different configurations or performance, and may include one or more central processing units (central processing units, CPU) 2014 (for example, one or more processors) and a memory 2032, and one or more storage media 2030 (for example, one or more mass storage devices) that store an application program 2042 or data 2044. The memory 2032 and the storage medium 2030 may be transitory storage or persistent storage. The program stored in the storage medium 2030 may include one or more modules (not shown in the figure), and each module may include a series of instructions for performing operations on the training device. Further, the central processing unit 2014 may be configured to communicate with the storage medium 2030, and perform operations on the training device 2000 by using the series of instructions in the storage medium 2030.

The training device 2000 may further include one or more power supplies 2026, one or more wired or wireless network interfaces 2050, one or more input/output interfaces 2058, or one or more operating systems 2041, such as Windows Server™, Mac OS X™, Unix™, Linux™, or FreeBSD™.

Specifically, the training device may perform the model training method in the embodiment corresponding to FIG. 15.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device in the embodiments of this application may be specifically a chip. The chip includes a processing unit and a communications unit. The processing unit may be, for example, a processor. The communications unit may be, for example, an input/output interface, a pin, or a circuit. The processing unit may execute computer-executable instructions stored in a storage unit, so that a chip in the execution device performs the data processing method described in the embodiments, or a chip in the training device performs the data processing method described in the embodiments. Optionally, the storage unit is an on-chip storage unit, for example, a register or a buffer. Alternatively, the storage unit may be an off-chip storage unit, for example, a read-only memory (read-only memory, ROM), another type of static storage device that can store static information and instructions, or a random access memory (random access memory, RAM) in a wireless access device.

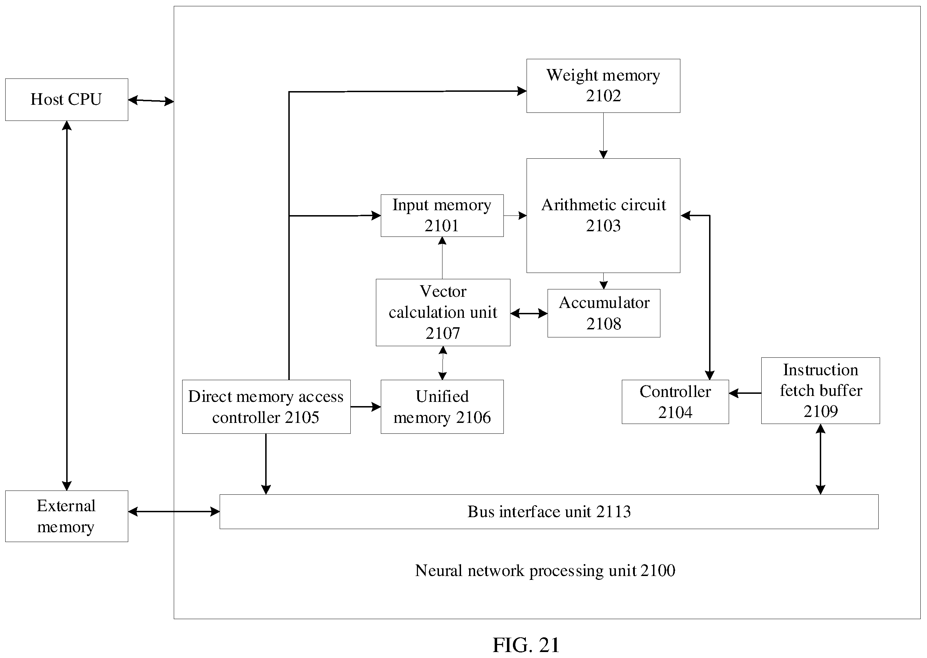

Specifically, FIG. 21 is a schematic diagram of a structure of a chip according to an embodiment of this application. The chip may be represented as a neural network processing unit NPU 2100. The NPU 2100 is mounted to a host CPU (Host CPU) as a coprocessor, and the host CPU assigns a task. A core part of the NPU is an arithmetic circuit 2103. A controller 2104 controls the arithmetic circuit 2103 to extract matrix data in a memory and perform a multiplication operation.

In some implementations, the arithmetic circuit 2103 internally includes a plurality of processing units (Process Engine, PE). In some implementations, the arithmetic circuit 2103 is a two-dimensional systolic array. The arithmetic circuit 2103 may alternatively be a one-dimensional systolic array or another electronic circuit capable of performing mathematical operations such as multiplication and addition. In some implementations, the arithmetic circuit 2103 is a general-purpose matrix processor.

For example, it is assumed that there is an input matrix A, a weight matrix B, and an output matrix C. The arithmetic circuit fetches, from a weight memory 2102, data corresponding to the matrix B, and buffers the data on each PE in the arithmetic circuit. The arithmetic circuit fetches data of the matrix A from an input memory 2101, performs a matrix operation on the data with the matrix B, and stores an obtained partial result or final result of the matrix in an accumulator (accumulator) 2108.

A unified memory 2106 is configured to store input data and output data. Weight data is directly transferred to the weight memory 2102 by using a direct memory access controller (Direct Memory Access Controller, DMAC) 2105. The input data is also transferred to the unified memory 2106 by using the DMAC.

A BIU, bus interface unit, that is, a bus interface unit 2113, is configured for interaction between an AXI bus and the DMAC and interaction between the AXI bus and an instruction fetch buffer (Instruction Fetch Buffer, IFB) 2109.

The bus interface unit 2113 (Bus Interface Unit, BIU for short) is used by the instruction fetch buffer 2109 to obtain an instruction from an external memory, and further used by the direct memory access controller 2105 to obtain original data of the input matrix A or the weight matrix B from the external memory.

The DMAC is mainly configured to transfer the input data in the external memory DDR to the unified memory 2106, transfer the weight data to the weight memory 2102, or transfer the input data to the input memory 2101.

A vector calculation unit 2107 includes a plurality of arithmetic processing units. When necessary, the vector calculation unit 2107 performs further processing on an output of the arithmetic circuit 2103, for example, vector multiplication, vector addition, an exponential operation, a logarithmic operation, and value comparison. The vector calculation unit 2107 is mainly configured to perform network calculation, such as batch normalization (batch normalization), pixel-level summation, and upsampling on a predictive label plane at a non-convolutional or non fully connected layer in a neural network.

In some implementations, the vector calculation unit 2107 can store a processed output vector in the unified memory 2106. For example, the vector calculation unit 2107 may apply a linear function or a nonlinear function to the output of the arithmetic circuit 2103, for example, perform linear interpolation on a predictive label plane extracted by a convolutional layer, or for another example, accumulate value vectors to generate an activation value. In some implementations, the vector calculation unit 2107 generates a normalized value, a pixel-level summation value, or both. In some implementations, the processed output vector can be used as an activation input to the arithmetic circuit 2103, for example, for use at a subsequent layer in the neural network.

The instruction fetch buffer (instruction fetch buffer) 2109 connected to the controller 2104 is configured to store an instruction used by the controller 2104.

All of the unified memory 2106, the input memory 2101, the weight memory 2102, and the instruction fetch buffer 2109 are on-chip memories. The external memory is private for a hardware architecture of the NPU.

Any one of the foregoing processors may be a general-purpose central processing unit, a microprocessor, an ASIC, or one or more integrated circuits for controlling program execution.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all of the modules may be selected based on an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or may certainly be implemented by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in the embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. An image classification method, wherein the method is implemented by using a transformer network, and the method comprises:

obtaining (601) M first features of a target image, wherein $M \geq 1$;
performing (602) linear transformation processing based on a $k^{th}$ first feature to obtain a $k^{th}$ second feature, a $k^{th}$ third feature, and a $k^{th}$ fourth feature, wherein $k=1, ..., M$;
calculating (603) a distance between the $k^{th}$ second feature and the $k^{th}$ third feature to obtain a $k^{th}$ fifth feature;
performing (604) first fusion processing based on the $k^{th}$ fifth feature and the $k^{th}$ fourth feature to obtain a $k^{th}$ sixth feature; and
obtaining (605) a classification result of the target image based on M sixth features;
wherein the performing (604) first fusion processing based on the $k^{th}$ fifth feature and the $k^{th}$ fourth feature to obtain a $k^{th}$ sixth feature comprises:

processing an element of the $k^{th}$ fifth feature and an element of the $k^{th}$ fourth feature based on an addition operation to obtain the $k^{th}$ sixth feature;
wherein the $k^{th}$ fourth feature comprises $N \times d/M$ elements, and the processing an element of the $k^{th}$ fifth feature and an element of the $k^{th}$ fourth feature based on an addition operation to obtain the $k^{th}$ sixth feature comprises:

performing absolute value processing on an $x^{th}$ column vector of the $k^{th}$ fourth feature to obtain an absolute-value $x^{th}$ column vector of the $k^{th}$ fourth feature;
performing addition processing on the absolute-value $x^{th}$ column vector and a $y^{th}$ row vector of the $k^{th}$ fifth feature to obtain a $q^{th}$ second intermediate vector, wherein $x=1, ..., d/M$, $y=1, ..., N$, and $h=1, ..., N \times d/M$;
setting a sign of the $q^{th}$ second intermediate vector to be the same as a sign of the $x^{th}$ column vector, to obtain a sign-set $q^{th}$ second intermediate vector; and
performing addition processing on all elements of the sign-set $q^{th}$ second intermediate vector to obtain an element in a $y^{th}$ row and an $x^{th}$ column of the $k^{th}$ sixth feature; and

wherein each second feature is a query feature in a self-attention mechanism, each third feature is a key feature in the self-attention mechanism, and each fourth feature is a value feature in the self-attention mechanism.

2. The method according to claim 1, wherein the calculating (603) a distance between the $k^{th}$ second feature and the $k^{th}$ third feature to obtain a $k^{th}$ fifth feature comprises:

calculating the distance between the $k^{th}$ second feature and the $k^{th}$ third feature based on an addition operation to obtain the $k^{th}$ fifth feature.

3. The method according to claim 2, wherein the $k^{th}$ second feature comprises N row vectors, the $k^{th}$ third feature comprises N row vectors, and the calculating the distance between the $k^{th}$ second feature and the $k^{th}$ third feature based on an addition operation to obtain the $k^{th}$ fifth feature comprises:

performing subtraction processing on a $j^{th}$ row vector of the $k^{th}$ second feature and an $i^{th}$ row vector of the $k^{th}$ third feature to obtain a $p^{th}$ first intermediate vector, wherein j=1, ..., N, i=1, ..., N, and P=1, ..., N×N;

performing addition processing on all elements of the $p^{th}$ first intermediate vector to obtain an element in a $j^{th}$ row and an $i^{th}$ column of a $k^{th}$ seventh feature; and

performing scaling processing and normalization processing on the $k^{th}$ seventh feature to obtain the $k^{th}$ fifth feature.

4. The method according to claim 1, wherein the performing (602) linear transformation processing based on a $k^{th}$ first feature to obtain a $k^{th}$ second feature, a $k^{th}$ third feature, and a $k^{th}$ fourth feature comprises:

obtaining a first weight matrix, a second weight matrix, and a third weight matrix;

performing, by using the first weight matrix, the linear transformation processing formed by addition operations, on the $k^{th}$ first feature to obtain the $k^{th}$ second feature;

performing, by using the second weight matrix, the linear transformation processing formed by addition operations, on the $k^{th}$ first feature to obtain the $k^{th}$ third feature; and

performing, by using the third weight matrix, the linear transformation processing formed by addition operations, on the $k^{th}$ first feature to obtain the $k^{th}$ fourth feature.

5. An image classification apparatus, wherein the apparatus comprises a memory and a processor, the memory stores code, the processor is configured to execute the code, and when the code is executed, the image classification apparatus performs the method according to any one of claims 1 to 4.

6. A computer storage medium, wherein the computer storage medium stores one or more instructions, and when the instruction is executed by one or more computers, the one or more computers are enabled to implement the method according to any one of claims 1 to 4.

7. A computer program product, wherein the computer program product stores instructions, and when the instructions are executed by a computer, the computer is enabled to implement the method according to any one of claims 1 to 4.

**Patentansprüche**

1. Bildklassifizierungsverfahren, wobei das Verfahren durch Verwenden eines Transformatornetzwerks umgesetzt wird und das Verfahren Folgendes umfasst:

Erlangen (601) von M ersten Merkmalen eines Zielbildes, wobei M≥1;

Durchführen (602) einer linearen Transformationsverarbeitung basierend auf einem k-ten ersten Merkmal, um ein k-tes zweites Merkmal, ein k-tes drittes Merkmal und ein k-tes viertes Merkmal zu erlangen, wobei k=1, ..., M;

Berechnen (603) eines Abstands zwischen dem k-ten zweiten Merkmal und dem k-ten dritten Merkmal, um ein k-tes fünftes Merkmal zu erlangen;

Durchführen (604) einer ersten Fusionsverarbeitung basierend auf dem k-ten fünften Merkmal und dem k-ten vierten Merkmal, um ein k-tes sechstes Merkmal zu erlangen; und

Erlangen (605) eines Klassifizierungsergebnisses des Zielbildes basierend auf M sechsten Merkmalen;

wobei das Durchführen (604) der ersten Fusionsverarbeitung basierend auf dem k-ten fünften Merkmal und dem k-ten vierten Merkmal, um ein k-tes sechstes Merkmal zu erlangen, Folgendes umfasst:

Verarbeiten eines Elements des k-ten fünften Merkmals und eines Elements des k-ten vierten Merkmals basierend auf einer Additionsoperation, um das k-te sechste Merkmal zu erlangen;

wobei das k-te vierte Merkmal N×d/M Elemente umfasst und das Verarbeiten eines Elements des k-ten fünften Merkmals und eines Elements des k-ten vierten Merkmals basierend auf einer Additionsoperation, um das k-te sechste Merkmal zu erlangen, Folgendes umfasst:

Durchführen einer Absolutwertverarbeitung auf einem x-ten Spaltenvektor des k-ten vierten Merkmals, um einen Absolutwertx-ten Spaltenvektor des k-ten vierten Merkmals zu erlangen;

Durchführen einer Additionsverarbeitung auf dem Absolutwert-x-ten Spaltenvektor und einem y-ten Zeilenvektor des k-ten fünften Merkmals, um einen q-ten zweiten Zwischenvektor zu erlangen, wobei x=1, ..., d/M, y=1, ..., N und h=1, ..., N×d/M;

Setzen des Vorzeichens des q-ten zweiten Zwischenvektors auf das gleiche Vorzeichen wie das Vorzeichen des x-ten Spaltenvektors, um einen q-ten zweiten Zwischenvektor mit gesetztem Vorzeichen zu erlangen; und

Durchführen einer Additionsverarbeitung auf sämtlichen Elementen des q-ten zweiten Zwischenvektors mit gesetztem Vorzeichen, um ein Element in einer y-ten Zeile und einer x-ten Spalte des k-ten sechsten Merkmals zu erlangen; und

wobei jedes zweite Merkmal ein Abfragemerkmal in einem Selbstaufmerksamkeitsmechanismus ist, jedes dritte Merkmal ein Schlüsselmerkmal in dem Selbstaufmerksamkeitsmechanismus ist und jedes vierte Merkmal ein Wertmerkmal in dem Selbstaufmerksamkeitsmechanismus ist.

2. Verfahren nach Anspruch 1, wobei das Berechnen (603) eines Abstands zwischen dem k-ten zweiten Merkmal und dem k-ten dritten Merkmal, um ein k-tes fünftes Merkmal zu erlangen, Folgendes umfasst:
Berechnen des Abstands zwischen dem k-ten zweiten Merkmal und dem k-ten dritten Merkmal basierend auf einer Additionsoperation, um das k-te fünfte Merkmal zu erlangen.

3. Verfahren nach Anspruch 2, wobei das k-te zweite Merkmal N Zeilenvektoren umfasst, das k-te dritte Merkmal N Zeilenvektoren umfasst und das Berechnen des Abstands zwischen dem k-ten zweiten Merkmal und dem k-ten dritten Merkmal basierend auf einer Additionsoperation, um das k-te fünfte Merkmal zu erlangen, Folgendes umfasst:

Durchführen einer Subtraktionsverarbeitung auf einem j-ten Zeilenvektor des k-ten zweiten Merkmals und einem i-ten Zeilenvektor des k-ten dritten Merkmals, um einen p-ten ersten Zwischenvektor zu erlangen, wobei j=1, ..., N, i=1, ..., N und P=1, ..., N×N;

Durchführen einer Additionsverarbeitung auf sämtlichen Elementen des p-ten ersten Zwischenvektors, um ein Element in einer j-ten Zeile und einer i-ten Spalte eines k-ten siebten Merkmals zu erlangen; und

Durchführen einer Skalierungsverarbeitung und Normalisierungsverarbeitung auf dem k-ten siebten Merkmal, um das k-te fünfte Merkmal zu erlangen.

4. Verfahren nach Anspruch 1, wobei das Durchführen (602) einer linearen Transformationsverarbeitung basierend auf einem k-ten ersten Merkmal, um ein k-tes zweites Merkmal, ein k-tes drittes Merkmal und ein k-tes viertes Merkmal zu erlangen, Folgendes umfasst:

Erlangen einer ersten Gewichtungsmatrix, einer zweiten Gewichtungsmatrix und einer dritten Gewichtungsmatrix;

Durchführen, durch Verwenden der ersten Gewichtungsmatrix, der durch Additionsoperationen gebildeten linearen Transformationsverarbeitung auf dem k-ten ersten Merkmal, um das k-te zweite Merkmal zu erlangen;

Durchführen, durch Verwenden der zweiten Gewichtungsmatrix, der durch Additionsoperationen gebildeten linearen Transformationsverarbeitung auf dem k-ten ersten Merkmal, um das k-te dritte Merkmal zu erlangen; und

Durchführen, durch Verwenden der dritten Gewichtungsmatrix, der durch Additionsoperationen gebildeten linearen Transformationsverarbeitung auf dem k-ten ersten Merkmal, um das k-te vierte Merkmal zu erlangen.

5. Bildklassifizierungsvorrichtung, wobei die Vorrichtung einen Speicher und einen Prozessor umfasst, der Speicher einen Code speichert, der Prozessor dazu konfiguriert ist, den Code auszuführen, und die Bildklassifizierungsvorrichtung, wenn der Code ausgeführt wird, das Verfahren nach einem der Ansprüche 1 bis 4 durchführt.

6. Computerspeichermedium, wobei das Computerspeichermedium eine oder mehrere Anweisungen speichert und, wenn die Anweisung durch einen oder mehrere Computer ausgeführt wird, der eine oder die mehreren Computer in die Lage versetzt werden, das Verfahren nach einem der Ansprüche 1 bis 4 umzusetzen.

7. Computerprogrammprodukt, wobei das Computerprogrammprodukt Anweisungen speichert und, wenn die Anweisungen durch einen Computer ausgeführt werden, der Computer in die Lage versetzt wird, das Verfahren nach einem der Ansprüche 1 bis 4 umzusetzen.

**Revendications**

1. Procédé de classification d'image, dans lequel le procédé est mis en œuvre à l'aide d'un réseau de transformateurs, et le procédé comprend :

   l'obtention (601) de M premières caractéristiques d'une image cible, dans lequel $M \geq 1$ ;
   la réalisation (602) d'un traitement de transformation linéaire sur la base d'une $k^{-ième}$ première caractéristique pour obtenir une $k^{-ième}$ deuxième caractéristique, une $k^{-ième}$ troisième caractéristique, et une $k^{-ième}$ quatrième caractéristique, dans lequel $k=1, ..., M$ ;
   le calcul (603) d'une distance entre la $k^{-ième}$ deuxième caractéristique et la $k^{-ième}$ troisième caractéristique pour obtenir une $k^{-ième}$ cinquième caractéristique ;
   la réalisation (604) d'un premier traitement de fusion sur la base de la $k^{-ième}$ cinquième caractéristique et de la $k^{-ième}$ quatrième caractéristique pour obtenir une $k^{-ième}$ sixième caractéristique ; et
   l'obtention (605) d'un résultat de classification de l'image cible sur la base de M sixièmes caractéristiques ;
   dans lequel la réalisation (604) d'un premier traitement de fusion sur la base de la $k^{-ième}$ cinquième caractéristique et de la $k^{-ième}$ quatrième caractéristique pour obtenir une $k^{-ième}$ sixième caractéristique comprend :

      le traitement d'un élément de la $k^{-ième}$ cinquième caractéristique et d'un élément de la $k^{-ième}$ quatrième caractéristique sur la base d'une opération d'addition pour obtenir la $k^{-ième}$ sixième caractéristique ;
      dans lequel la $k^{-ième}$ quatrième caractéristique comprend $N \times d/M$ éléments, et le traitement d'un élément de la $k^{-ième}$ cinquième caractéristique et d'un élément de la $k^{-ième}$ quatrième caractéristique sur la base d'une opération d'addition pour obtenir la $k^{-ième}$ sixième caractéristique comprend :

         la réalisation d'un traitement de valeur absolue sur un $x^{-ième}$ vecteur colonne de la $k^{-ième}$ quatrième caractéristique pour obtenir un $x^{-ième}$ vecteur colonne de valeur absolue de la $k^{-ième}$ quatrième caractéristique ;
         la réalisation d'un traitement d'addition sur le $x^{-ième}$ vecteur colonne de valeur absolue et un $y^{-ième}$ vecteur ligne de la $k^{-ième}$ cinquième caractéristique pour obtenir un $q^{-ième}$ second vecteur intermédiaire, dans lequel $x=1, ..., d/M$, $y=1, ..., N$ et $h=1,...,N \times d/M$ ;
         la définition d'un signe du $q^{-ième}$ second vecteur intermédiaire pour qu'il soit le même qu'un signe du $x^{-ième}$ vecteur colonne, pour obtenir un $q^{-ième}$ second vecteur intermédiaire à signe défini ; et
         la réalisation d'un traitement d'addition sur tous les éléments du $q^{-ième}$ second vecteur intermédiaire à signe défini pour obtenir un élément dans une $y^{-ième}$ ligne et une $x^{-ième}$ colonne de la $k^{-ième}$ sixième caractéristique ; et
         dans lequel chaque deuxième caractéristique est une caractéristique de requête dans un mécanisme d'auto-attention, chaque troisième caractéristique est une caractéristique clé dans le mécanisme d'auto-attention, et chaque quatrième caractéristique est une caractéristique de valeur dans le mécanisme d'auto-attention.

2. Procédé selon la revendication 1, dans lequel le calcul (603) d'une distance entre la $k^{-ième}$ deuxième caractéristique et la $k^{-ième}$ troisième caractéristique pour obtenir une $k^{-ième}$ cinquième caractéristique comprend :
   le calcul de la distance entre la $k^{-ième}$ deuxième caractéristique et la $k^{-ième}$ troisième caractéristique sur la base d'une opération d'addition pour obtenir la $k^{-ième}$ cinquième caractéristique.

3. Procédé selon la revendication 2, dans lequel la $k^{-ième}$ deuxième caractéristique comprend N vecteurs lignes, la $k^{-ième}$ troisième caractéristique comprend N vecteurs lignes, et le calcul de la distance entre la $k^{-ième}$ deuxième caractéristique et la $k^{-ième}$ troisième caractéristique sur la base d'une opération d'addition pour obtenir la $k^{-ième}$ cinquième caractéristique comprend :

la réalisation d'un traitement de soustraction sur un j-ième vecteur ligne de la k-ième deuxième caractéristique et un j-ième vecteur ligne de la k-ième troisième caractéristique pour obtenir un p-ième premier vecteur intermédiaire, dans lequel j=1, ..., N, i=1, ..., N, et P=1,..., N×N ;

la réalisation d'un traitement d'addition sur tous les éléments du p-ième premier vecteur intermédiaire pour obtenir un élément dans une j-ième ligne et une j-ième colonne d'une k-ième septième caractéristique ; et

la réalisation d'un traitement de mise à l'échelle et d'un traitement de normalisation sur la k-ième septième caractéristique pour obtenir la k-ième cinquième caractéristique.

4. Procédé selon la revendication 1, dans lequel la réalisation (602) d'un traitement de transformation linéaire sur la base d'une k-ième première caractéristique pour obtenir une k-ième deuxième caractéristique, une k-ième troisième caractéristique, et une k-ième quatrième caractéristique comprend :

l'obtention d'une première matrice de poids, d'une deuxième matrice de poids, et d'une troisième matrice de poids ;

la réalisation, à l'aide de la première matrice de poids, du traitement de transformation linéaire formé par des opérations d'addition, sur la k-ième première caractéristique pour obtenir la k-ième deuxième caractéristique ;

la réalisation, à l'aide de la deuxième matrice de poids, du traitement de transformation linéaire formé par des opérations d'addition, sur la k-ième première caractéristique pour obtenir la k-ième troisième caractéristique ; et

la réalisation, à l'aide de la troisième matrice de poids, du traitement de transformation linéaire formé par des opérations d'addition, sur la k-ième première caractéristique pour obtenir la k-ième quatrième caractéristique.

5. Appareil de classification d'image, dans lequel l'appareil comprend une mémoire et un processeur, la mémoire stocke un code, le processeur est configuré pour exécuter le code, et lorsque le code est exécuté, l'appareil de classification d'image réalise le procédé selon l'une quelconque des revendications 1 à 4.

6. Support de stockage informatique, dans lequel le support de stockage informatique stocke une ou plusieurs instructions, et lorsque les instructions sont exécutées par un ou plusieurs ordinateurs, les un ou plusieurs ordinateurs sont activés pour mettre en œuvre le procédé selon l'une quelconque des revendications 1 à 4.

7. Produit de programme informatique, dans lequel le produit de programme informatique stocke des instructions, et lorsque les instructions sont exécutées par un ordinateur, l'ordinateur est activé pour mettre en œuvre le procédé selon l'une quelconque des revendications 1 à 4.

Intelligent information chain

Intelligent product and industry application

Translation, text analysis, ... | Speech, vision, image, ...

Data

Data processing: | Data training, machine learning, or deep learning | Search, inference, or decision making | ...

Infrastructure | Sensor | Intelligent chip | Basic platform | ...

IT value chain

FIG. 1

FIG. 2a

EP 4 375 872 B1

| User | Intelligent terminal |
|---|---|

**13:21**

Interaction interface

| To-be-enhanced image | Enhanced image |
|---|---|

Memory

Processor:

| Data training, machine learning, or deep learning | Search, inference, or decision making | ... |
|---|---|---|

Intelligent terminal

FIG. 2b

300

Data storage system 250

Execution device 210

...

Communications network

Local device 301

Local device 302

For example

FIG. 2c

```
                    ┌─────────────────────────┐
                    │  Data collection device │                        100
                    │           160           │
                    └─────────────┬───────────┘
         Training sample          │
                                  ▼
                    ┌─────────────────────────┐        ┌──────────────────────┐
                    │                         │        │   Training device    │
                    │     Database 130        │───────▶│         120          │
                    │                         │        └──────────┬───────────┘
                    └─────────────────────────┘                   │
Primary  │ Object                                                 │
region   │ category                                               │  Execution
         │                                                        │  device 110
         │                    ┌────────┐   ┌───────────────────────────────────┐
         │                    │  I/O   │   │         ┌ ─ ─ ─ ─ ─ ─ ─ ─ ─ ─ ┐    │
  ┌──────────────┐ User       │interface│   │         │   CNN feature       │    │   ┌──────────────┐
  │   Client     │ behavior   │  112   │──▶│         │ extraction model    │◀──┼──▶│ Data storage │
  │ device 140   │───────────▶│        │   │         └ ─ ─ ─ ─ ─ ─ ─ ─ ─ ─ ┘    │   │ system 150   │
  │              │◀───────────│        │◀──│         Computing module 111       │   └──────────────┘
  └──────────────┘  Object    └────────┘   └───────────────────────────────────┘
         ▲           category
```

FIG. 3

Obtain a target image $\qquad$ 401

Process the target image by using a transformer network, to obtain a classification result of the target image, where the transformer network includes a self-attention module, and an operation of calculating an attention feature of the target image by the self-attention module is implemented by an adder circuit $\qquad$ 402

Display the classification result of the target image $\qquad$ 403

FIG. 4

Obtain a target image $\qquad$ 501

Display a classification result of the target image, where the classification result of the target image is determined based on a distance between a second feature and a third feature that are obtained by inputting the target image into a self-attention module, the second feature is a Q-feature, and the third feature is a K-feature $\qquad$ 502

FIG. 5

Obtain M first features of a target image, where M≥1  ⟋ 601

Perform linear transformation processing based on a $k^{th}$ first feature to obtain a $k^{th}$ second feature, a $k^{th}$ third feature, and a $k^{th}$ fourth feature, where k=1, ..., M  ⟋ 602

Calculate a distance between the $k^{th}$ second feature and the $k^{th}$ third feature to obtain a $k^{th}$ fifth feature  ⟋ 603

Perform first fusion processing based on the $k^{th}$ fifth feature and the $k^{th}$ fourth feature to obtain a $k^{th}$ sixth feature  ⟋ 604

Obtain a classification result of the target image based on M sixth features  ⟋ 605

FIG. 6

Classification network

L×self-attention network

Second fusion module

Feedforward module

First fusion module

Multi-head self-attention module

Second linear transformation unit

Splicing unit

Self-attention module 1

Self-attention module 2

...

Self-attention module M

Feature obtaining unit

Normalization unit

Feature extraction network

FIG. 7

k<sup>th</sup> self-attention
module

Normalization unit

Calculation
unit

Fusion unit

First linear transformation unit

FIG. 8

FIG. 9

FIG. 10

FIG. 11

FIG. 12

FIG. 13

FIG. 14

Obtain a to-be-processed image | 1501

Input the to-be-processed image into a to-be-trained model to obtain a classification prediction result of the to-be-processed image | 1502

Obtain a target loss based on the classification prediction result and a real classification result of the to-be-processed image, where the target loss is used to indicate a difference between the classification prediction result and the real classification result | 1503

Update a model parameter of the to-be-trained model based on the target loss until a model training condition is met, to obtain a transformer network | 1504

FIG. 15

Image classification apparatus

First obtaining module — 1601

First processing module — 1602

Second processing module — 1603

Third processing module — 1604

Second obtaining module — 1605

FIG. 16

Model training apparatus

First obtaining module ⎯ 1701

Processing module ⎯ 1702

Second obtaining module ⎯ 1703

Updating module ⎯ 1704

FIG. 17

Image classification apparatus

Obtaining module ⌐ 1801

Display module ⌐ 1802

FIG. 18

FIG. 19

2000

Training device

| 2014 | Central processing unit | | Power supply | 2026 |

| | Operating system | 2041 |
| | Data | 2044 |
| | Application program | 2042 |
| | Storage medium | 2030 |

Wired or wireless network interface — 2050

Input/Output interface — 2058

| Memory | 2032 |

FIG. 20

FIG. 21

Neural network processing unit 2100

- Host CPU
- External memory
- Weight memory 2102
- Arithmetic circuit 2103
- Accumulator 2108
- Input memory 2101
- Vector calculation unit 2107
- Unified memory 2106
- Instruction fetch buffer 2109
- Controller 2104
- Direct memory access controller 2105
- Bus interface unit 2113

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- An Image is Worth 16x16 Words: Transformers for Image Recognition at Scale. **ALEXEY DOSOVITS-KIY et al.** ARXIV.ORG. CORNELL UNIVERSITY LIBRARY, 03 June 2021